# EUROPEAN PATENT SPECIFICATION

(11) **EP 4 273 030 B1**
(45) Date of publication and mention of the grant of the patent: **11.12.2024**
(21) Application number: 22171776.2
(22) Date of filing: 05.05.2022
(51) Int. Cl.: B62D 55/075, B62D 55/07, B62D 55/26

(54) **CEILING SUSPENSION ARRANGEMENT EXHIBITING AT LEAST ONE CRAWLER TYPE CEILING UNIT AS WELL AS METHOD OF SUSPENDING THE CEILING UNIT AT A CEILING STRUCTURE**
DECKENAUFHÄNGUNGSANORDNUNG, DIE MINDESTENS EINE RAUPENARTIGE DECKENEINHEIT AUFWEIST, SOWIE VERFAHREN ZUM AUFHÄNGEN DER DECKENEINHEIT AN EINER DECKENSTRUKTUR
AGENCEMENT DE SUSPENSION DE PLAFOND PRÉSENTANT AU MOINS UNE UNITÉ DE PLAFOND DE TYPE CHENILLE AINSI QUE PROCÉDÉ DE SUSPENSION DE L'UNITÉ DE PLAFOND À UNE STRUCTURE DE PLAFOND

(43) Date of publication of application: 08.11.2023
(73) Proprietor: Ceilix AG, 82049 Pullach i. Isartal (DE)
(72) Inventor: Siedel, Michael Torsten, 53902 Bad Münstereifel (DE)
(74) Representative: Jostarndt Patentanwalts-AG

(56) References cited:
- CN-A- 110 228 541
- DE-U1- 202020 100 256
- JP-A- S59 227 570
- US-A1- 2018 050 747

## Description

### TECHNICAL FIELD

The present invention refers to ceiling suspension arrangements exhibiting at least one crawler type ceiling unit. Further, the present invention refers to a method of suspending the ceiling unit at a ceiling structure, especially in context with two-dimensional positioning of the ceiling unit. In particular, the present invention refers to devices and methods according to features of the enclosed independent and dependent claims.

### BACKGROUND

In prior art, an example of which is shown in DE 20 2020 100256 U1, multiple design philosophies have already been established in context with provision of systems which shall be able to ensure a predefined position or motion also in rough terrain or in context with unpredictable reaction forces or at high inclination or in an overhead arrangement. The present invention focuses on those philosophies departing from the idea that a unit or vehicle or any means of transportation should engage / interact in predefined manner with a predefined structure at a wall or at the ceiling (e.g. overhead cranes, wall crawling robots) e.g. in a storehouse or in a machinery hall. Some ideas of provision of reliable contact between the structure and the unit have already been published in context with diagnosis and parameter measurement in nearly inaccessible areas or systems (e.g. ductwork, canal systems), including magnetic adhesion / interference. Nonetheless, there is a need for systems being capable of providing, by interacting with a predefined structure, both a predefined traveling motion and a high accuracy in positioning (positional accuracy) in very reliable manner, preferably irrespective of the kind of underground or wall constitution, wherein the predefined structure should preferably be provided in very flexible and varied manner to many kinds of areas or different kinds of wall or ceiling contour / geometry.

The skilled person may differentiate between those units or vehicles which are provided for moving on the underground and those vehicles which are provided for moving along a ceiling structure, especially since the latter have to be suspended in secure manner also, in order to avoid going down. Therefore, there might be different approaches as to the kinematics ensuring interaction/engagement at the structure's interface. The present invention focuses on interaction/engagement at/with ceiling structures.

### SUMMARY

It is an object of the present invention to provide for a system which allows for reliable and accurate suspension/positioning/traveling of at least one unit at a ceiling structure, especially for realizing variable two-dimensional tracks of motion of the unit. In particular, the object also includes providing for a suspension mechanism resp. suspension means allowing for securely suspending the ceiling unit e.g. also in context with load-carrying issues. In particular, the object may also include provision of an appropriate system or concept for reliably coupling one or a plurality of ceiling units with the ceiling structure and also ensuring reliable positioning or even predefined paths of motion. Also, the object of the present invention may further include actively driving methods for movably suspending such a ceiling units at the ceiling structure, e.g. in context with logistic tasks.

The object of the present invention is solved by the features of the independent main claims. Advantageous features are indicated in the subclaims. If not explicitly excluded, the teachings of the subclaims can be combined arbitrarily with the teachings of the main claims and the subclaims.

According to a first aspect, the present invention provides for a ceiling suspension arrangement exhibiting at least one crawler type ceiling unit and a ceiling structure extending in at least two spatial directions, wherein the ceiling structure comprises a plurality of profile units (especially rails) extending (preferably continuously, especially without any structural discontinuity) in a first spatial direction, wherein the ceiling structure defines at least one structural regularity in a second spatial direction (thereby providing a one-dimensional raster with discrete coupling points distributed in at least one equidistant regularity in said second spatial direction); and wherein the crawler type ceiling unit exhibits a plurality of suspension elements configured for suspending the ceiling unit and configured for coupling the crawler type ceiling unit to the ceiling structure by means of de-/coupling kinematics depending on a relative motion of the ceiling unit with respect to the ceiling structure in at least said second spatial direction, wherein the ceiling unit exhibits at least two circumferential tracks (especially tracks based on or defined by traction means, preferably chain-based tracks), wherein the suspension elements are attached to the circumferential tracks at predefined longitudinal positions corresponding to the structural regularity, wherein the circumferential tracks respectively define a specific path of circumferential motion of the respective suspension elements (resp. of coupling means of the suspension elements, especially of a free end of the respective suspension element), thereby providing for de-/coupling kinematics during a motion of the crawler type ceiling unit in said second spatial direction, especially with the crawler type ceiling unit being configured to be moved in said first spatial direction along the profile units irrespective of momentary motion in said second spatial direction. Such configuration not only facilitates implementation in context with complex structures or in context with a plurality of ceiling units to be used at the same time, but also considerably increases variability as to positioning. Thereby, the present invention also provides for practical scalability (both with respect to the structure and with respect to the number of ceiling units), even in three-dimensional extension, if desired.

According to one embodiment, the crawler type ceiling unit is a crawler type ceiling vehicle, optionally exhibiting at least one drive unit (motor, actuator) for actively driving the crawler type ceiling unit along the structure.

Accordingly, the present invention also concerns kinematics of suspension elements being (autonomously) de-/coupled by a motion along circumferential tracks, based on geometrically predefined kinematics. Optionally, the de-/coupling kinematics can be actively driven by the ceiling unit itself. In particular, the object can also be solved by a crawler type ceiling unit configured for actively traveling in a suspended manner especially headlong at a structure, wherein the ceiling unit exhibits: a plurality of suspension elements configured for suspending the ceiling unit and configured for coupling the ceiling unit to the structure, and at least one drive configured for circumferential driving/guiding motion (resp. drive motion of the suspension elements along the circumferential tracks), wherein the suspension elements are attached to the first circumferential track at predefined first longitudinal positions corresponding to a predefined raster (especially a/the raster defined by the structure), wherein the ceiling unit is configured for moving along the structure by decoupling a subset of the plurality of suspension elements from resp. coupling them into the structure when the suspension elements are guided along (the) two circumferential tracks by the circumferential motion (driving/guiding motion). Such a configuration also allows for actively moving the ceiling unit (or, for letting the ceiling unit autonomously) without being limited to a predefined path of motion defined by specific profile units, e.g. rails (or the like) of the structure.

According to the present disclosure, when it is referred to "ceiling structure", a structure which may also extend (at least in parts) on the ground or along a wall or on an inclined plane (or the like) can be designated. The present invention can preferably be applied for ceiling units (resp. ceiling vehicles) being arranged at resp. traveling along a ceiling structure, and in addition, the present invention also allows for any motion along any structure with alternative orientation and/or arrangement. Thus, referring to a "structure" or "ceiling structure" includes reference to any other "structure" exhibiting the features presently described allowing for coupling with/to the inventive ceiling unit and corresponding de-/coupling kinematics.

According to the present disclosure, when it is referred to "vehicle" or "ceiling vehicle", the disclosure also generally refers to crawler type units or vehicles and its relative spatial arrangement or traveling motion (e.g. also on the ground or on an inclined plane or at the wall).

According to the present disclosure, when it is referred to "circumferential track", the disclosure also generally refers to closed loop guidings and lines and predefined contours along which the suspension elements are guided and/or driven, e.g. chains or any such traction means providing for a closed loop.

According to the present disclosure, when it is referred to "profile units" or "profiles" or "T-profiles", the disclosure also generally refers to different kinds of profiles like e.g. I-profiles or L-profiles which may provide for advantageous/favourable arrangements in individual applications.

According to the present disclosure, when it is referred to "package", especially in context with logistics, a package is understood to be any physical objects that can be transported and preferably does not exceed certain dimensions and/or a certain weight (e.g. items of daily use such as consumables or food as well as technical items and equipment or mail items, advertising material, brochures). For example, the packages are unpackaged items, packaged items and repackaged items, whereby in the case of packaged and repackaged items the "package" may comprise the packaging or repackaging as well as the item packaged therein. Likewise, it can be expedient to process unpackaged objects, in particular commodity objects. Each package may include an individual identification feature, e.g. an identification code (especially a physical code which is applied, for example, to the package, to an outer packaging of the package or to a storage unit for the package and/or a transport unit for the package, and/or a digital code which is assigned to the package and/or to a digital twin of the package). Each package can be reproduced/mirrored in digital manner in a digital twin (or a digital twin mirrors several packages), wherein (also) the digital twin preferably comprises at least one identification mark. E.g., a package/packet is associated with a packet identification code, and the digital twin of the packet contains the packet identification code.

It should be noted that according to the invention, the crawler type ceiling unit can also be guided by a user, pulling/pushing the ceiling crawler into a specific direction. I.e., active drives are not necessarily provided. In particular, in conjunction with appropriate sensor-actor-arrangements, the crawler type ceiling unit may follow an intended direction resp. an intended path of motion (especially as a kind of semi passive guide mode; guidance via physical and/or visual interaction with an individual).

According to one embodiment the ceiling suspension arrangement is configured for at least passive motion (externally driven) of the (respective) crawler type ceiling unit in said at least two spatial directions, and/or wherein the crawler type ceiling unit is configured for at least two-dimensional arbitrary motion in arbitrary directions defined by said at least two spatial directions (resp. lying within a plane defined by said two spatial directions).

According to one embodiment the profile units respectively exhibit at least one tread, wherein each suspension element exhibits at least one element of motion (for gliding or rolling, especially at least one wheel) arranged and configured for at least passively moving (especially gliding or rolling) the crawler type ceiling unit in said first spatial direction.

According to one embodiment the crawler type ceiling unit is configured for enabling at least one closed loop trajectory of respective suspension elements along corresponding circumferential tracks, especially configured for enabling at least two closed loop trajectories of at least two subsets of respective suspension elements.

According to one embodiment the circumferential tracks are shaped in such a manner that the respective suspension elements are de-/coupled from/into the ceiling structure when passing a curved section of the tracks.

According to one embodiment a subset of the suspension elements are attached to one of the circumferential tracks (resp. a subset of the first subset, momentary) and at least one further subset of the suspension elements are attached to a further one of the circumferential tracks (resp. a subset of the second subset, momentary) respectively at predefined first and second (further) longitudinal positions respectively corresponding to the structural regularity, in particular with each suspension element being guided by a pair of circumferential tracks.

According to one embodiment the suspension elements are fixedly attached/coupled by means of a first pulley to/with a/the first circumferential track and are guided within a/the second circumferential track by means of a second pulley respectively, wherein the first and second pulley preferably are arranged at a lever arm of the respective suspension element.

According to one embodiment each suspension element exhibits a first pulley and a second pulley arranged in longitudinal distance with respect to the first pulley at a lever arm of the respective suspension element, wherein the suspension element is coupled to a/the first and a/the second circumferential tracks via the first and second pulleys.

According to one embodiment a respective subset of said suspension elements are connected to each other by means of longitudinal connecting elements, especially by chain elements, thereby forming a closed loop of interrelated suspension elements distanced to each other in a/the predefined structural regularity.

According to one embodiment the respective circumferential track exhibits a chain or is provided/defined by a chain forming a closed loop of interrelated chain elements.

According to one embodiment the crawler type ceiling unit is configured for lifting a/the respective suspension elements out of the structure in an unloaded state, especially such that both de-/coupling kinematics for a subset of momentarily unloaded suspension elements and suspension of the crawler type ceiling unit by a subset of momentarily loaded suspension elements is ensured.

According to one embodiment the crawler type ceiling unit exhibits at least two kinds/types of suspension elements, wherein the different types of suspension elements are de-/coupled according to individual kinematics (especially in opposite directions/sides at the profile units, especially both in and opposite to the second spatial direction resp. travel direction of the crawler type ceiling unit), wherein a first subset of the suspension elements are attached to a first pair of circumferential tracks (resp. a subset of the first subset, momentary) and at least one further subset of the suspension elements are attached to a second pair of circumferential tracks (resp. a subset of the second subset, momentary) respectively at predefined first and second (further) longitudinal positions respectively corresponding to the structural regularity (resp. to the distance of the profile units defined by said structural regularity), wherein the first and second pairs of circumferential tracks provide for individual kinematics for the first and second subsets of suspension elements, especially such that the crawler type ceiling unit is secured with respect to opposite sides/directions (of the second spatial direction) at the structure resp. at the profile units.

According to one embodiment each suspension element is guided by a pair of circumferential tracks, wherein the crawler type ceiling unit exhibits at least three pairs of circumferential tracks each guiding a subset of the suspension elements, wherein said de-/coupling kinematics are predefined by said three pairs of circumferential tracks in such a manner that that respective suspension elements (resp. a subset of the respective subset, momentary) simultaneously de-/couple both at a first side (resp. first longitudinal position) of a respective profile unit and at a second side (resp. second longitudinal position) of a respective profile unit, especially such that the crawler type ceiling unit is secured with respect to opposite sides/directions (of the second spatial direction) at the ceiling structure, especially with all suspension elements being guided in same circumferential direction, especially with all circumferential tracks being arranged in parallel to each other.

According to one embodiment the crawler type ceiling unit exhibits at least one load attachment point configured for transferring loads of an external load (e.g. an object or a subject/individual to be carried/transported/moved along the ceiling in one- or two-dimensional manner) attached to the crawler type ceiling unit.

According to one embodiment the crawler type ceiling unit exhibits at least one hoist unit, or the ceiling suspension arrangement exhibits at least two crawler type ceiling units each exhibiting at least one hoist unit, wherein the hoist unit is configured for transferring loads of an external load (e.g. an object or a subject/individual) to the ceiling structure.

According to one embodiment the crawler type ceiling unit exhibits at least one drive interacting with (resp. driving) at least one of the circumferential tracks, wherein the ceiling suspension arrangement is configured for a predefinable driven motion of the crawler type ceiling unit at least in said second spatial direction (especially back and forth).

According to one embodiment the crawler type ceiling unit exhibits an energy storage unit providing energy to a/the at least one drive of the crawler type ceiling unit, especially to a/the at least one drive interacting with (resp. driving) at least one of the circumferential tracks.

According to one embodiment the ceiling suspension arrangement exhibits or defines at least one energy charging point/position, wherein the ceiling suspension arrangement is configured for charging the at least one crawler type ceiling unit with energy when being arranged in/at said energy charging point/position.

According to one embodiment the ceiling suspension arrangement exhibits a plurality of energy supply lines extending along at least a subset of the profile units, wherein at least a subset of the suspension elements of the respective crawler type ceiling unit are configured for energy extraction via the energy supply lines, e.g. by means of current collectors or power-sliders provided at a free end (resp. at elements of motion) of the respective suspension element coupling with the profile units.

According to one embodiment the ceiling suspension arrangement (especially the at least one crawler type ceiling unit) exhibits a sensing device exhibiting at least one sensor from the following group: speed sensor, distance sensor, position measuring sensor, force sensor, acceleration sensor resp. gyroscope; wherein the ceiling suspension arrangement is configured for controlling the at least one crawler type ceiling unit based on (depending on) momentary measuring data of the at least one sensor.

According to one embodiment the (respective) crawler type ceiling unit exhibits a communicating unit configured for wireless communication at least within the ceiling suspension arrangement, wherein the (respective) crawler type ceiling unit exhibits an energy storage unit providing energy to the communicating unit, especially such that the crawler type ceiling unit is energetically self-sustaining (autarkic) for at least a period of several days or weeks or month.

According to one embodiment the ceiling suspension arrangement is configured for localizing individual crawler type ceiling units based on at least one locating signal transmitted by individual crawler type ceiling units (passively or actively, e.g. passively based on at least one individual transmitter, especially based on individual identification features).

According to one embodiment each suspension element exhibits at least one element of motion (for gliding or rolling, especially at least one wheel) arranged and configured for moving (especially gliding or rolling) the crawler type ceiling unit in said first spatial direction, wherein the crawler type ceiling unit exhibits at least two drives interacting with both at least one of the circumferential tracks and with said elements of motion, wherein the ceiling suspension arrangement is configured for a predefinable two-dimensional driven motion of the crawler type ceiling unit in said spatial directions.

According to one embodiment the profile units of the ceiling suspension arrangement are arranged according to at least two different structural regularities (especially structural densities) respectively with respect to said second spatial direction (i.e., distributed according to at least two equidistant regularities), namely a first structural regularity defining a/the relative distance of the profile units matching with the relative (longitudinal) distance of the suspension elements attached at the tracks (with respect to each other), and a second structural regularity being a whole-number multiple of said first structural regularity (resp. of the relative longitudinal distance of the suspension elements attached at the tracks), wherein the number of momentarily engaging/coupling suspension elements preferably is at least two within a/the overlapping area of the second structural regularity, and wherein a/the area of the first structural regularity preferably has a first load-bearing capacity and the area of the second structural regularity has a second load-bearing capacity (especially smaller than the first load-bearing capacity).

According to one embodiment the profile units of the ceiling suspension arrangement spatially define at least two different allowable loads (according to at least two different/specific load-bearing capacities) in at least two spatial sections of the ceiling suspension arrangement along the ceiling (wherein the cross section remains identical, geometrically).

According to one embodiment at least a subset of the profile units of the ceiling suspension arrangement respectively exhibit at least one delimitating zone or boundary line defining a limit between a traveling area for the at least one crawler type ceiling unit and an inaccessible boundary area of the ceiling structure (in which the at least one crawler type ceiling unit shall not travel or shall not be positioned).

According to one embodiment the ceiling suspension arrangement is coupled with/to a further ceiling suspension arrangement, wherein the profile units of the ceiling suspension arrangement are arranged according to a first structural regularity (especially structural density), wherein the profile units of the further ceiling suspension arrangement are arranged according to a second structural regularity, wherein the second structural regularity is a whole-number multiple of said first structural regularity; wherein the ceiling suspension arrangements may extend for example on at least two different levels of altitude or floors.

According to one embodiment the ceiling suspension arrangement extends on at least two different levels of altitude (thereby providing for three-dimensional travel directions), wherein the ceiling suspension arrangement comprises at least one elevator exhibiting an elevator ceiling structure geometrically corresponding to/with the ceiling structure of the ceiling suspension arrangement, wherein the ceiling structure merges/transitions to the elevator ceiling structure (structural transition), wherein the elevator is configured to travel from at least a first level to a second level, thereby interconnecting said levels of altitude and a plurality of ceiling structures extending at said at least two different levels.

According to one embodiment the ceiling suspension arrangement exhibits a plurality of crawler type ceiling units each exhibiting at least one attachment point or hoist unit each being configured for transferring loads of an external load of at least 50kg or 100kg to the ceiling structure, wherein the ceiling suspension arrangement is configured for arranging a plurality of external loads in individual two-dimensional or three-dimensional positions with respect to each other, especially respectively being attached at one crawler type ceiling unit.

According to one embodiment the crawler type ceiling unit exhibits at least one attachment point or hoist unit structurally connected with at least one of the circumferential tracks, wherein the crawler type ceiling unit is configured for transferring loads of an external load (e.g. of an individual) of at least 200kg or 500kg to the ceiling structure, wherein the ceiling suspension arrangement is configured for at least two-dimensional transportation/movement of at least one individual suspended via the attachment point or hoist unit along the ceiling structure.

According to one embodiment the crawler type ceiling unit exhibits at least one attachment point or hoist unit structurally connected with at least one of the circumferential tracks, wherein the crawler type ceiling unit is configured for transferring loads of an external load (e.g. of an equipment, a machine or an engine or any such industrial object) of at least 1.000kg or 10.000kg to the ceiling structure, wherein the ceiling suspension arrangement is configured for at least two-dimensional transportation/movement of the external load being suspended via the attachment point or hoist unit along the ceiling structure.

According to one embodiment the ceiling suspension arrangement exhibits a plurality of crawler type ceiling units each exhibiting at least one attachment point or hoist unit each being configured for transferring loads of an external load to the ceiling structure, wherein the ceiling suspension arrangement is configured for controlling the one- or two-dimensional movement or path of motion of a subset of at least two of the crawler type ceiling units in dependence on each other, especially such that the crawler type ceiling units of the (respective) subset move analogously (especially remaining at the same distance with respect to each other), especially by also controlling at least two hoists of the (respective) subset carrying the same external load.

According to one embodiment the ceiling suspension arrangement exhibits a plurality of crawler type ceiling units each exhibiting at least one accommodating cavity configured for accommodating at least one package, wherein the ceiling suspension arrangement exhibits at least one control unit configured for wireless control resp. wireless data transmission (especially based on at least one communicating unit, e.g. near filed, mobile network, LAN, LP-WAN, SigFox, NBIoT), wherein the ceiling suspension arrangement is configured for controlling the one- or two-dimensional movement or path of motion of a respective crawler type ceiling unit (especially in dependence on a desired/required target position, especially based on at least one identification feature of the respective crawler type ceiling unit or package wirelessly transmitted by the respective crawler type ceiling unit or wirelessly acquired by a/the control unit of the ceiling suspension arrangement) and/or of a subset of at least two of the crawler type ceiling units in dependence on each other, especially such that the plurality of crawler type ceiling unit simultaneously move according to a plurality of individual one- or two-dimensional paths of motion.

According to one embodiment the crawler type ceiling unit exhibits at least one attachment point or hoist unit each being configured for transferring loads of an external load to the ceiling structure, wherein the ceiling suspension arrangement exhibits a sensing device exhibiting at least one sensor from the following group: force sensor, acceleration sensor resp. gyroscope; wherein the ceiling suspension arrangement is configured for gravity offloading based on active force exertion in at least one spatial direction via the attachment point or hoist unit (especially active force vertically upwards), wherein the amount of force is depending on (resp. is adapted to) effective gravity and/or effective load (effective gravitational forces exerted at the attachment point or hoist unit) especially based on momentary data of the at least one force sensor, preferably with the amount of force being adjustable e.g. according to individual user commands.

According to one embodiment the at least one crawler type ceiling unit exhibits at least one drive, wherein the ceiling suspension arrangement unit exhibits a control unit controlling the drive, wherein the ceiling suspension arrangement exhibits a sensing device exhibiting at least one sensor from the following group: speed sensor, distance sensor, position measuring sensor, force sensor, acceleration sensor resp. gyroscope; wherein the ceiling suspension arrangement is configured for controlling the at least one crawler type ceiling unit based on (depending on) momentary measuring data of the at least one sensor, especially for controlling an absolute or a relative position or state of motion of the at least one crawler type ceiling unit.

According to one embodiment the ceiling suspension arrangement exhibits a plurality of crawler type ceiling units respectively exhibiting at least one sensor (position, distance, speed, acceleration) and a communicating unit communicating with a (central) control unit of the ceiling suspension arrangement, wherein the ceiling suspension arrangement is configured for predefining a plurality of individual paths of two-dimensional motion of respective crawler type ceiling units (especially such that each individual path of motion is adjusted resp. adapted to momentary moving conditions and positions of the further crawler type ceiling units, especially by providing individual commands to at least one drive or actuator of each crawler type ceiling unit, especially based on at least one individual identification feature, e.g. a code which is specific for each individual ceiling unit).

According to one embodiment the ceiling suspension arrangement exhibits a central control unit monitoring at least the momentary positions of the (active) crawler type ceiling units of the ceiling suspension arrangement, wherein each crawler type ceiling unit exhibits a communicating unit for wireless transmission of control signals to at least one drive or actuator of the respective crawler type ceiling unit;
**or** wherein the ceiling suspension arrangement is configured for decentral control, wherein each crawler type ceiling unit exhibits a sensing device providing momentary sensor data (especially speed and/or distance and/or position and/or acceleration data) to at least one drive or actuator of the crawler type ceiling unit.

According to one embodiment the ceiling suspension arrangement is configured to block the respective crawler type ceiling unit with respect to at least one direction of motion, especially by blocking the circumferential motion along the circumferential tracks (fixed position at least with respect to the second spatial direction) and/or by blocking elements of motions (for gliding or rolling along the profile units, especially wheel) of the respective suspension elements (fixed position at least with respect to the first spatial direction), thereby providing for (optional) one-dimensional motion only in said first or second spatial direction.

According to one embodiment the ceiling suspension arrangement comprises a database configured for storing and accessing at least one digital twin of individual crawler type ceiling units and/or individual packages carried by crawler type ceiling units of the ceiling suspension arrangement, wherein the digital twin at least comprises information of momentary status (e.g. relative/absolute position, speed, loading condition, weight, capacity, energy status), wherein the ceiling suspension arrangement is configured to define at least one control parameter for individual crawler type ceiling units based on information of the at least one digital twin, especially for remotely controlling individual crawler type ceiling units.

It should be noted that in context with the present invention, it is considered convenient to integrate at least one, advantageously several, even more advantageously as much as possible information in the digital twin of a package/packet.

The above mentioned object is also solved by a method of suspending/positioning at least one crawler type ceiling unit at a ceiling structure extending in at least two spatial directions for providing at least two degrees of freedom for at least two-dimensional positioning or two-dimensional (traveling) motions of the (respective) crawler type ceiling unit in suspended manner headlong the ceiling structure, especially in conjunction with actively moving/driving the crawler type ceiling unit along the ceiling structure, especially by actively re-orientating the crawler type ceiling unit's traveling direction (which can be carried out via remote control of at least one drive unit or actuator of the respective crawler type ceiling unit), especially in/with a ceiling suspension arrangement as described above, wherein the ceiling structure comprises a plurality of profile units extending in a first spatial direction, wherein the ceiling structure defines at least one structural regularity in a second spatial direction (thereby defining a one-dimensional raster with discrete coupling points only in said second spatial direction); wherein the crawler type ceiling unit is suspended by means of a plurality of suspension elements coupling the crawler type ceiling unit to the ceiling structure by means of de-/coupling kinematics depending on a relative motion of the ceiling unit with respect to the ceiling structure in at least said second spatial direction, wherein the suspension elements are (respectively) attached to and guided by at least two circumferential tracks (especially tracks based on or defined by traction means, preferably chain-based tracks) of the crawler type ceiling unit, wherein the circumferential tracks respectively define a specific path of circumferential motion of the respective suspension elements, thereby providing for de-/coupling kinematics which suspend and relatively move the respective suspension element with respect to the ceiling structure during a relative motion of the crawler type ceiling unit (with respect to the ceiling structure) in said second spatial direction, especially with the crawler type ceiling unit remaining movable (at least passively) in said first spatial direction along the profile units irrespective of momentary motion in said second spatial direction.

The above mentioned object is also solved by a computer program comprising instructions which, when the program is executed by a computer, cause the computer to execute steps of the method as described above in context with provision and control of the motion or relative/absolute positions of at least one crawler type ceiling unit, especially by controlling the at least one drive of at least one crawler type ceiling unit interacting with at least one of the circumferential tracks, especially based on momentary absolute and/or relative position data of the at least one crawler type ceiling unit.

Abstract: The present invention refers to ceiling suspension arrangements exhibiting at least one crawler type ceiling unit and a ceiling structure extending in at least two spatial directions and defining at least one structural regularity, wherein the crawler type ceiling unit exhibits a plurality of suspension elements for suspending the ceiling unit and for coupling the crawler type ceiling unit to the ceiling structure, wherein the crawler type ceiling unit exhibits at least two circumferential tracks, wherein the suspension elements are attached to the circumferential tracks at predefined longitudinal positions corresponding to the structural regularity, wherein the circumferential tracks respectively define a specific path of circumferential motion of the respective suspension elements. Further, the present invention refers to a method of suspending the ceiling unit at a ceiling structure, especially in context with two-dimensional positioning of the ceiling unit.

### SHORT DESCRIPTION OF FIGURES

These and other aspects of the present invention will also be apparent from and elucidated with reference to the embodiments described hereinafter. Individual features disclosed in the embodiments can constitute, alone or in combination, an aspect of the present invention. Features of different embodiments can be carried over from one embodiment to another embodiment. In the drawings:
**Figures 1A****,** **1B****,** **1C****,** **1D****,** **1E****,** **1F****,** **1G****,** **1H, 1J, 1K, 1L, 1M, 1N, 1O** show in perspective views and in side views components of a crawler type ceiling unit resp. of the corresponding ceiling suspension arrangement according to one embodiment;
**Figures 2A, 2B, 2C** show in perspective views an arrangement of suspension elements and respective arrangement along a circumferential track of a ceiling unit according to one embodiment;
**Figures 3A, 3B, 3C** show in perspective views details of suspension elements of a ceiling unit according to one embodiment;
**Figures 4A****,** **4B, 4C, 4D****,** **4E, 4F****,** **4G** show in perspective views and in side views components of a ceiling unit according to a further embodiment;
**Figures 5A, 5B, 5C, 5D** illustrate in different perspective views an exemplary path of a motion of a ceiling unit according to one of the embodiments;
**Figures 6A, 6B** show, in side views, components of a ceiling unit according to two further embodiments (full suspension, and suspension with respect to vertical forces of inertia and lateral forces);
**Figures 7A, 7B****,** **7C, 7D** illustrate in different perspective views exemplary paths of motion (orientations of operation) of a ceiling unit according to one of the embodiments;
Figures 8A, **8B****,** **9A, 9B** show in perspective views ceiling units according to further embodiments (with and without counter bearing);
**Figures 10A, 10B** show in perspective views a ceiling unit according to a further embodiment;
**Figures 11A, 11B, 11C****,** **14A, 14B** show in perspective views details of suspension elements (and their suspension) of a ceiling unit according to embodiments, especially according to the embodiment shown in Fig. 10;
**Figures 12A, 12B** show in side views details of suspension elements of a ceiling unit according to embodiments, especially according to the embodiment shown in Fig. 10;
**Figure 13** shows in a perspective view details of a ceiling unit according to embodiments, especially according to the embodiment shown in Fig. 10;
**Figure 15** shows in a side view components of a chassis resp. housing of a ceiling unit according to embodiments, especially according to the embodiment shown in Fig. 10;
**Figures 16A, 16B** show in perspective views some of the details of suspension elements of a ceiling unit according to embodiments, especially according to the embodiment shown in Fig. 10;
**Figures 17A, 17B** show in perspective views some of the details of a crawler type ceiling unit for a ceiling suspension arrangement according to embodiments;
**Figures 18A****,** **18B** show in perspective views two different configurations of the ceiling structure of a ceiling suspension arrangement according to embodiments;
**Figures 19****,** **20** show in a top view and in a perspective view different kinds of ceiling suspension arrangements according to embodiments;
**Figures 21A, 21B** show in perspective views some of the details of a ceiling suspension arrangement according to embodiments with one or several crawler type ceiling units carrying a load resp. an object, especially for logistic tasks;
**Figures 22A, 22B, 22C** show in perspective views some of the details of a ceiling suspension arrangement according to embodiments with several crawler type ceiling units conjointly carrying and handling a load resp. an object, especially for logistic tasks;
**Figure 23** shows in a perspective view a ceiling suspension arrangement according to an embodiment, wherein two crawler type ceiling units respectively handle an individual, e.g. in context with gravity offloading based on active force exertion.

### DETAILED DESCRIPTION OF FIGURES

First, the reference signs are described in general terms; individual reference is made in connection with respective figures.

The present invention provides for a crawler type ceiling unit 10 having at least one chassis 17 resp. housing. The ceiling unit 10 is configured for moving / traveling along a ceiling structure 1 exhibiting a predefined structural regularity or raster 1a which is, e.g., defined by T-profiles resp. T-rails 1.1 or any such profile unit. The profile units 1.1 exhibit at least one wheel tread 1.2, and optionally, a power rail 1.3 providing for energy supply can be arranged at the profile units also. The ceiling unit 10 is coupled to the structure 1 and suspended via a plurality of suspension elements 13, 13a, 13b (e.g. each including at least one element of a closed loop or chain). A ceiling suspension arrangement 100 is composed of at least one ceiling unit 10 and at least one ceiling structure 1 (at least one type of ceiling structure).

The at least one chassis or housing 17 may provide for accommodation of a crawling or driving mechanism 11.1 (with or without motor(s) or actuator(s)) which allows for circumferential motion of the suspension elements 13 along circumferential tracks 12, namely simultaneously along a first and a second circumferential track 12a, 12b, which tracks exhibit individual shapes/contours XZa, XZb. Preferably, the tracks only extend two-dimensionally (2D), i.e. in a plane, and the shape is different at least in curved sections 12r of the tracks. Each track 12a, 12b exhibits a parallel/linear section 12p (resp. two parallel sections) and at least one redirection/curved section 12r (resp. two curved sections). A lateral area resp. surface shell of the at one chassis or housing is preferably flat, plane, even, respectively on each lateral side. Such a configuration is also favourable in view of interconnection of several chassis (side by side).

According to one embodiment, the ceiling unit 10 exhibits at least one further (second) chassis/housing exhibiting first and second circumferential tracks 12a, 12b and accommodating a plurality of further suspension elements 13b which are arranged mirror-inverted, with respect to the suspension elements 13 of the first housing. As an alternative, both types of suspension elements are arranged within the same housing (are part of the same chassis), and optionally, both types of suspension elements can be guided by the same pair of circumferential tracks. The chassis may (actively) provide for a traveling motion (e.g. by a synchronous guiding/driving motion of/to the suspension elements). Several chassis can be interconnected, e.g. via cross-beams or the like. Also, a first and a second chassis may provide for different driving motions, e.g. in order to force a non-linear, but curved/curvilinear traveling motion. The desired/required traveling motion can be controlled via a control unit 30 which can be coupled to at least one motor or actuator 11 (which is optional). In particular, the ceiling unit can be provided as a kind of passive vehicle which traveling motion is induced by external forces; in such a configuration, the inventive kinematics provide for suspending the ceiling unit (especially in predefinable positions), but not for actively driving the ceiling unit for any traveling motion. A drive section may also comprise at least one gear unit 18 configured for interacting with the track(s) and at least one energy storage unit 19. A sensor arrangement 40 exhibiting at least one sensing device 41, e.g. comprising position sensors 43 and velocity sensors 43 and/or weight sensors 43 and/or gyroscopes 43, may provide sensor data to the control unit.

Preferably, each suspension element 13, 13a, 13b exhibits a first pulley 13.1 and a second pulley 13.2, and optionally, a wheel 13.3 is provided at the free end of the suspension element 13 (bearing point P13). The first and second pulleys are arranged on a lever arm 13.5 in distance from/to each other (y-offset, longitudinal extension y13 of lever arm); the bearing point P13 resp. the wheel 13.3 is arranged at a protruding section resp. suspension arm 13.6 (z-offset). At the free end of the suspension arm, optionally, a current collector resp. power-slider 13.4 (conductive slider for energy transfer) is provided in an arrangement geometrically corresponding to a/the power rail 1.3 of the respective profile unit 1.1. The plurality of suspension elements 13 of a/the respective chassis 17 can be interconnected via longitudinal connecting elements 15 which can ensure a closed loop 15a of interrelated suspension elements. The suspension elements 13 are coupled to the respective circumferential tracks.

In other words: The suspension elements preferably exhibit a wheel 13.3 performing a rolling motion on the profile units of the ceiling structure, allowing for a motion which is orthogonal to the motion predefined and evoked by the tracks, wherein the wheel is positioned and aligned orthogonally with respect to the first and second pulleys. Optionally, the wheel can be motorised e.g. by means of further actuators or motors. The first pulley 13.1 is engaged with the first or second circumferential track, thereby following the contour defined by said track; also, the second pulley 13.2 is engaged with the first or second circumferential track, thereby following said track (which is different from the track engaged by the first pulley, i.e. vice versa). Lever arm 13.5 is preferably L-shaped, especially provided as integral element in one piece (massive, solid).

Preferably, the ceiling structure 1 and its raster 1a is defined by profile units 1.1 being arranged in parallel and with similar distance (pitch) to adjacent profile units. Each profile unit is preferably configured to support geometries/surface(s) which are adequate for interaction with the wheel(s) of the suspension elements (e.g. T-profile, C-profile, L-profile, I-profile), and a series of such profile units preferably provides for a planar surface at least in sections.

By means of the circumferential tracks and the suspension elements, the (respective) chassis and the kinematics defined by the shape of the tracks provide for decoupling kinematics 20 which ensure both vertical motion kinematics and non-circular pivot motion kinematics. Thereby, de-/coupling of each suspension element can be effected via circumferential motion along the tracks without the need of any axial telescopic motion within each suspension element. I.e., the respective suspension element can be designed as purely mechanic unit.

In particular, in context with logistic tasks, the ceiling unit 10 may exhibit at least one hoist unit 50 providing for a traction mechanism 51 (especially with rope winch) and having at least one transmission means 53 (especially a rope).

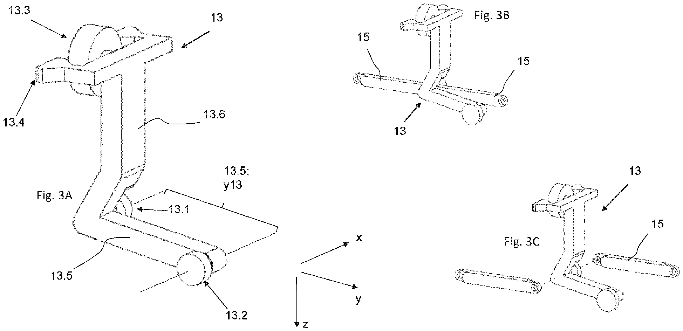

In the following, the kinematics provided by the guiding/driving motion along the circumferential tracks is described in general, first:
The first pulley 13.1 of each suspension element 13 rotates about a first pulley axis and defines a first guiding point G13.1 (coupling the first track and the respective suspension element), and vice versa, the corresponding point of the corresponding circumferential track defines that first guiding point G13.1 for each suspension element. Likewise, the second pulley 13.2 of each suspension element 13 rotates about a second pulley axis (which is preferably aligned in parallel) and defines a second guiding point G13.2 (coupling the second track and the respective suspension element). When referring to the kinematics of each suspension element, an instantaneous centre of rotation of each suspension element is defined by the axis of the first pulley 13.1 being coupled to the first track 12a, wherein coupling/attachment/fixation can be ensured e.g. at the axial section between a/the suspension arm 13.6 and the first pulley 13.1 (cf. Fig. 3B). The two tracks 12a, 12b are arranged with respect to another in such a manner that the contacting/bearing point/area P13 (coupling point) of the respective suspension element 13 can be hooked or hitched on the ceiling structure. According to a preferred arrangement, the wheel 13.3 of each suspension element rotates about a wheel axis which is preferably aligned orthogonally to the first and second pulley axis. Since each suspension element 13 is coupled to the tracks 12a, 12b in predefined positions, namely in a predefined first longitudinal position y12a via the first pulley 13.1 and in a predefined second longitudinal position y12b via the second pulley 13.2, when driving the tracks resp. when guiding the suspension elements along the tracks, the bearing point P13 at the free end of the suspension element 13 is guided according to the relative position/contour and distance of the corresponding tracks (of a pair of tracks guiding the respective suspension element).

The ceiling unit 10 may exhibit a control unit which can be a decentral (individual) control unit 31 (e.g. in an arrangement comprising a plurality of ceiling units each exhibiting an individual control unit). The ceiling suspension arrangement 100 may also comprise a central control unit 30.

Further, a respective ceiling unit 10 may exhibit a communicating unit 35 (e.g. near filed, mobile network, LAN, LP-WAN, SigFox, NBIoT) and/or a transmitter 36 (active or passive), especially for transmitting locating signals. These components are configured to interact in/with a positioning system 45.

The ceiling unit 10 can be configured to carry at least one external load 60 (especially object or individual) which can be attached to the ceiling unit 10 in an attachment point P60. Optionally, the attachment point P60 is provided by a hoist unit 50 resp. by transmission means 53 (rope) of the hoist unit 50. The external load 60 may comprise or consist of a package 61 (e.g. including consumables, food, postal items). The external load 60 may further comprise an identification feature 71, especially a code (e.g. including a number). Likewise, each ceiling unit 10 may comprise an identification feature 70, especially a code (e.g. including a number).

A digital twin 80 referring to a respective ceiling unit 10 and/or a digital twin 81 referring to a respective package 61 (or external load 60) can be stored in a database 82. The database is configured for storing and accessing the at least one digital twin at least comprising information of momentary status, wherein the ceiling suspension arrangement is configured to define at least one control parameter for individual crawler type ceiling units based on information of the at least one digital twin.

In the figures, (x) designates a/the first spatial direction (especially cross direction, especially direction of longitudinal extension of profile units), and (y) designates a/the second spatial direction (especially longitudinal direction or momentary driving direction of the ceiling unit), and (z) designates a/the third spatial direction (especially vertical direction).

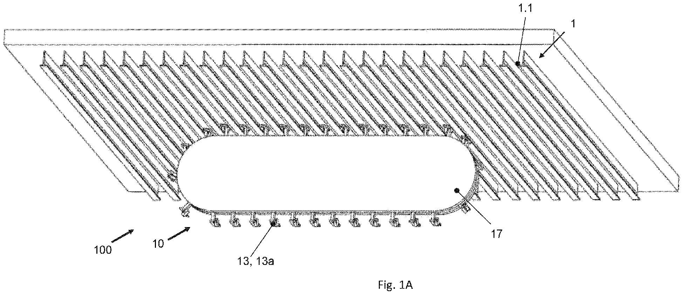

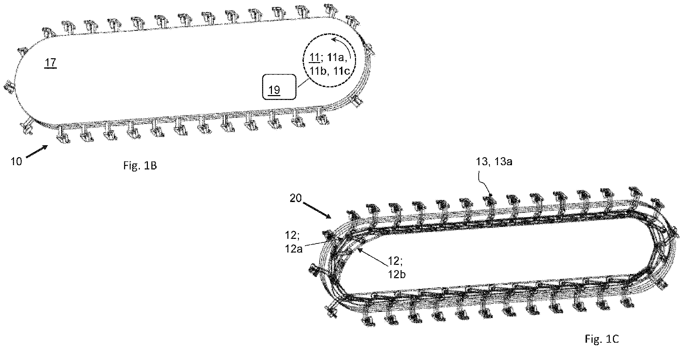

**Fig. 1A** shows a ceiling unit 10 exhibiting at least one chassis 17 and suspension elements 13, wherein a subset of the suspension elements 13 is momentarily coupled to a/the ceiling structure 1, namely to T-profiles (profile units 1.1). The suspension elements 13 are guided (and optionally also actively driven) along two circumferential tracks (not shown, cf. Fig. 1C), and de-/coupling is carried out in curved sections of circumferential tracks.

The ceiling unit 10 shown in Fig. 1A is suspended (hanging) at a ceiling structure. Nonetheless, the unit or vehicle 10 may also be suspended in a similar structure being arranged on the ground or at the wall. The unit is not necessarily provided in the form of a ceiling vehicle but is configure for being used/implemented as a ceiling crawler; thus, Fig. 1A illustrates an application/use at a structure which extends at a ceiling.

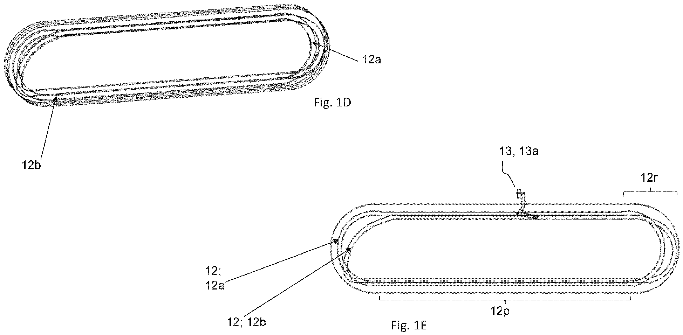

**Fig. 1B, 1C****,** **1D, 1E** show separate components of respective chassis units 17. At least one drive unit 11 or drive 11a, 11b, 11c (which is optional, i.e., which can be provided if active driving motion to the suspension elements is desired) provides for circumferential motion of the tracks 12a, 12b (or of the suspension elements interconnected to form a closed loop which is driven along the tracks), especially by means of at least one gear unit 18 engaging the tracks or any chain or traction means providing said closed loop. It is shown that the de-/coupling kinematics are provided within the curved sections 12r of the first and second circumferential tracks 12a, 12b. In contrast, within the parallel section(s) 12p, the suspension elements 13 remain in predefined relative positions at/with respect to the ceiling structure. In that section, the axis of the wheel 13.3 of the respective suspension element 13 is aligned parallel to the parallel section(s) 12p of the tracks. For example, the ceiling unit 10 comprises three chassis 17 each exhibiting at least one drive, wherein these drives can be controlled by one single drive unit. Alternatively, the ceiling unit 10 comprises two or three chassis 17 and exhibits only one single drive or drive unit, wherein a circumferential motion can be coupled to involve several chassis.

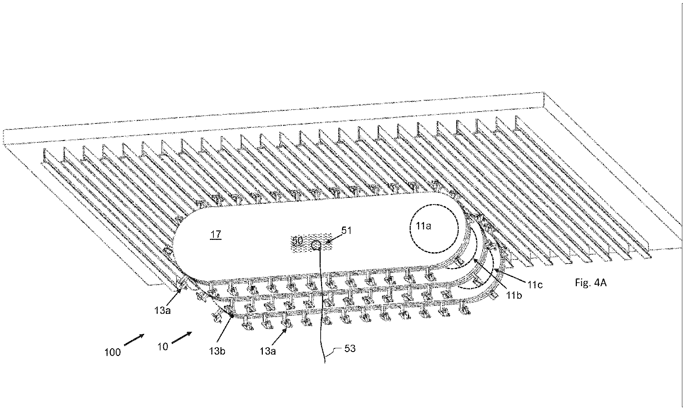

In case the ceiling unit exhibits several chassis, some of these components may also be arranged in a mirror-inverted manner, especially the suspension elements (cf. Fig. 4A). Thus, any detailed description of the figures relating to any separate/single component of the respective drive unit may also describe a similar configuration of any further drive units or any further redundant components.

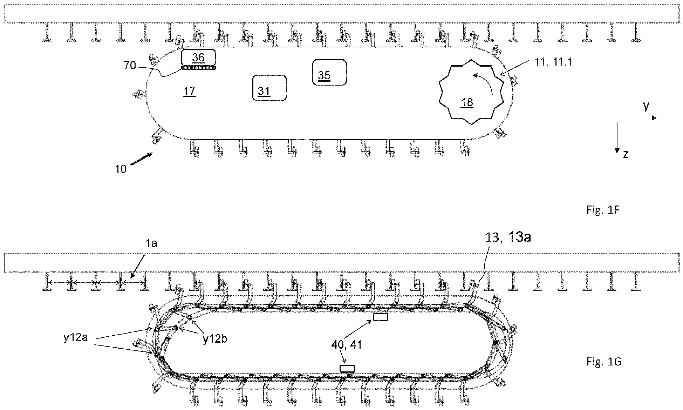

**Fig. 1F, 1G** illustrate the curved sections 12r in more detail; it can be seen that both the radius of curvature and the distance of the tracks with respect to each other deviates/changes in value and direction, thereby effecting a pivot motion of the suspension arm 13.6 (protruding section) and the wheel 13.3 resp. bearing point P13 of the respective suspension element 13 (especially pivoting within the plane yz as shown in Fig. 1F and pivoting about an x-axis and around the instantaneous centre of rotation Cr). Thus, both vertical motion kinematics and non-circular pivot motion kinematics can be provided by means of rigid/stiff components being guided/driven along two circumferential tracks with different shape/contour.

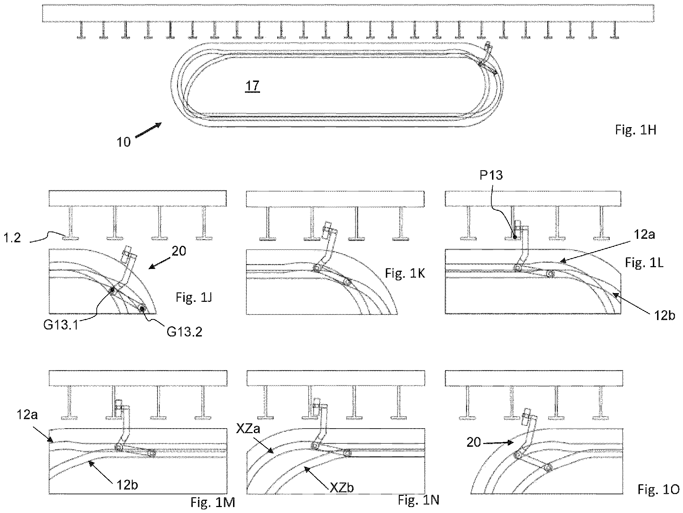

**Fig. 1H, 1J, 1K, 1L, 1M, 1N, 1O** show some more details of the de-/coupling kinematics 20. In particular, it can be seen that the first track 12a has a curvature bent up (upwards), thereby effecting a slight lifting of the wheel 13.3 from the wheel tread 1.2, namely when the first pulley 13.1 is passing that section. In particular, apart from one single section, the shape/contour XZb of the second circumferential track 12b runs (is arranged) within the shape/contour XZa of the first circumferential track 12a.

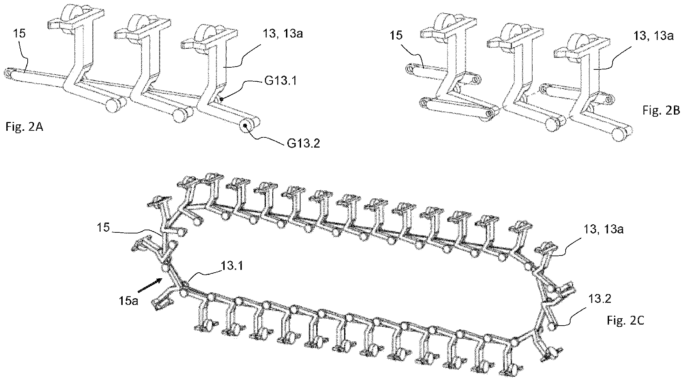

**Fig. 2A, 2B, 2C** show a plurality of suspension elements 13 being interconnected via longitudinal connecting elements 15 which thereby ensure a closed loop 15a of interrelated suspension elements. The suspension elements 13 (13a, 13b) are coupled to the respective circumferential tracks 12a, 12b via the first and second pulleys 13.1, 13.2.

In the embodiment shown in Fig. 2, the first and second pulleys 13.1, 13.2 are arranged on opposite lateral sides of the respective suspension element 13. Thus, the closed loop 15a of interrelated suspension elements is arranged between the first and second tracks 12a, 12b which extend on both lateral sides of the closed loop 15a.

The tracks 12a, 12b can be made of any kind of rail guide system components, in particular including at least one chain, belt, cable or the like traction or transmission means. The tracks 12a, 12b may comprise different guide/rail sections coupled together, each exhibiting a different radius of curvature or being linear. Also, the tracks 12a, 12b can be formed/made by on single continuous/coherent rail.

**Fig. 3A, 3B, 3C** show some more details of the suspension elements 13 and the connecting elements 15. E.g., the connecting elements 15 are coupled to the lever arm 13.5 at the axis of the first pulley 13.1, thereby facilitating pivot motion about that axis (resp. around the respective instantaneous centre of rotation Cr).

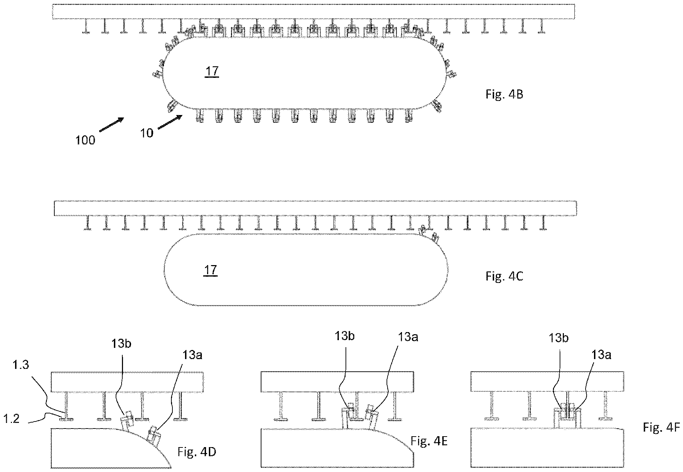

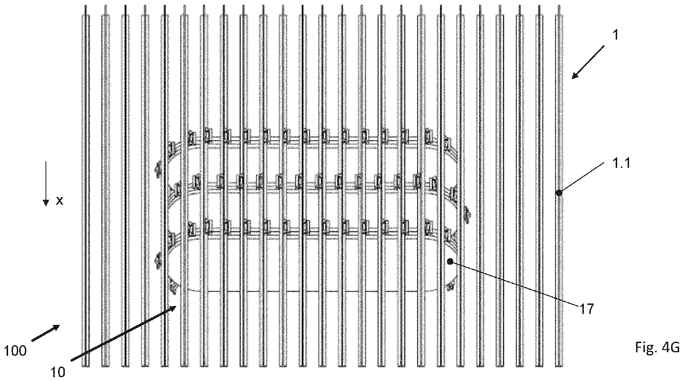

**Fig. 4A****,** **4B, 4C, 4D****,** **4E, 4F****,** **4G** show an embodiment of a ceiling unit 10 exhibiting three chassis 17 each exhibiting a drive unit 11a, 11b, 11c providing for circumferential driving motion of the suspension elements along the tracks, wherein the chassis can be interrelated/connected e.g. via cross-beams or the like.

Alternatively, one central drive unit may drive the suspension elements of all three chassis. In contrast to the configuration at the first chassis, the suspension elements 13b of the second chassis are arranged in mirror-inverted manner, but the suspension elements 13 of the third chassis are arranged in the same manner as the suspension elements 13 of the first chassis. As can be seen in Fig. 4E, 4F, that configuration allows for a really good security and stability level (both types of suspension elements 13, 13b are guided along the T-profiles, but on different lateral sides of the T-profiles). Alternatively, the ceiling unit 10 may only comprise two chassis.

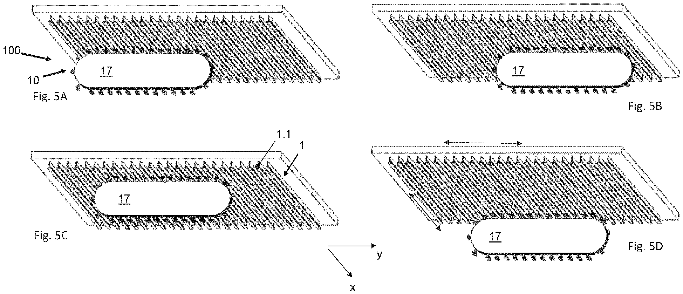

**Fig. 5A, 5B, 5C, 5D** show different kinds of traveling motions which can be effected by means of the ceiling unit 10 described herein. As already described further above, the present invention allows for two-dimensional traveling motion both in a first spatial direction (x) corresponding to the longitudinal direction/extension of the T-profiles 1.1 (dashed line arrow), and in a second spatial direction (y) corresponding to the driving direction resp. to the direction/extension of the tracks (dotted line arrow).

It should be mentioned that the T-profiles (profile units) shown in the figures may also be provided as other kinds of profile rails; i.e., the inventive mechanism/kinematics is/are not limited to use of T-profiles only; rather, the skilled person is aware of the fact that also other profiles offering adequate suspension for the suspension elements and optionally also a guiding track to the wheels can be used.

In the following, further aspects/details of embodiments of the present invention are described in more detail. For any reference signs or elements/components or aspects not explicitly mentioned/described, it is referred to above mentioned embodiments, respectively. The embodiments described in the following passages exhibit two or three chassis and at least one drive unit comprising a chain drive, and the first circumferential track comprises a chain (with a closed loop of interrelated chain elements arranging the corresponding suspension elements and optionally also arranging counter bearing elements), and the longitudinal connecting elements are provided in the form of chain elements.

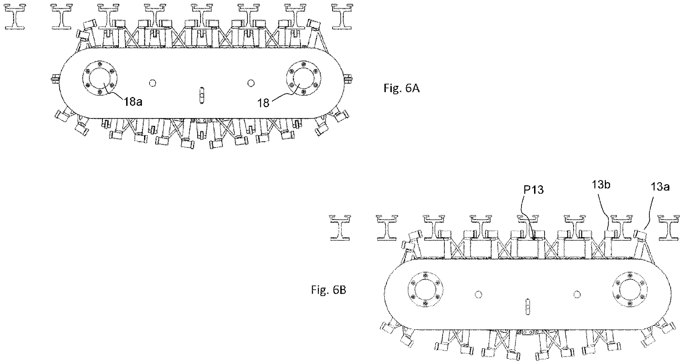

**Figure 6A** shows a ceiling unit exhibiting means for avoiding any relative motion of the ceiling unit with respect to the structure (full suspension especially also in view of any relative motion orthogonally/normally with respect to the structure), and **Figure 6B** shows a configuration which at least ensures secure the suspension in view of vertical forces of inertia and lateral forces (suspension devoid of counter bearings).

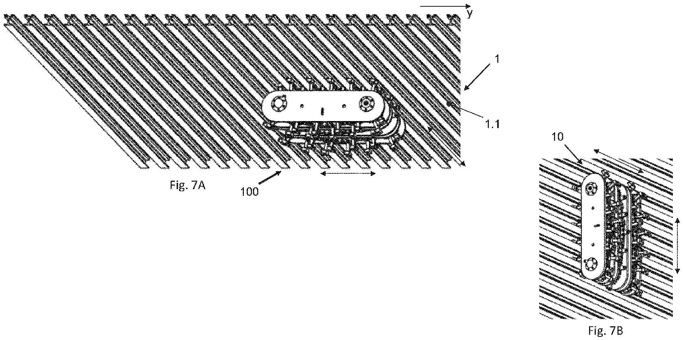

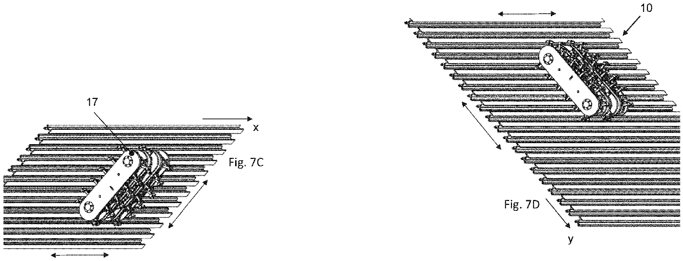

**Figures 7A, 7B****,** **7C, 7D** illustrate a ceiling suspension arrangement 100 comprising a ceiling unit 10 exhibiting three chassis. As already described further above, the present invention allows for two-dimensional traveling motion both in a first spatial direction corresponding to the longitudinal direction/extension of the T-profiles 1.1 (dashed line arrow), and in a second spatial direction corresponding to the driving direction resp. to the direction/extension of the tracks (dotted line arrow). Depending on the orientation of the structure resp. of the T-profiles 1.1, the first and/or second spatial direction may also comprise a vertical (z-)component, as illustrated in Fig. 7C, 7D (inclined plane / level). Therein, coordinates x, y shown in the figures in context with inclined planes refer to the longitudinal extension (x) of the (ceiling) structure.

The ceiling unit 10 shown in Fig. 7A is suspended at a ceiling structure. Nonetheless, the ceiling unit 10 may also be suspended in a similar structure being arranged on the ground or at the wall; thus, Fig. 7A illustrates an application/use at a ceiling structure. Same applies for any further figure of the present disclosure illustrating an application/use at a ceiling structure only as an example.

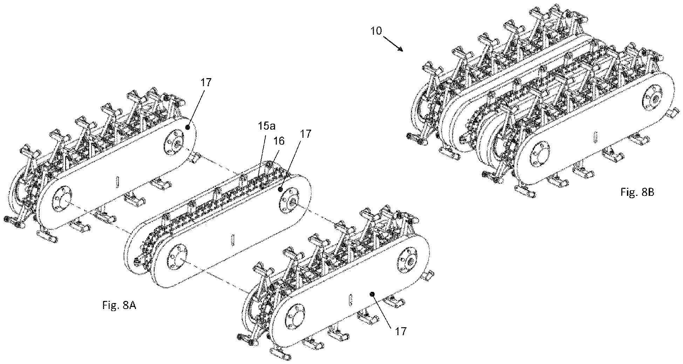

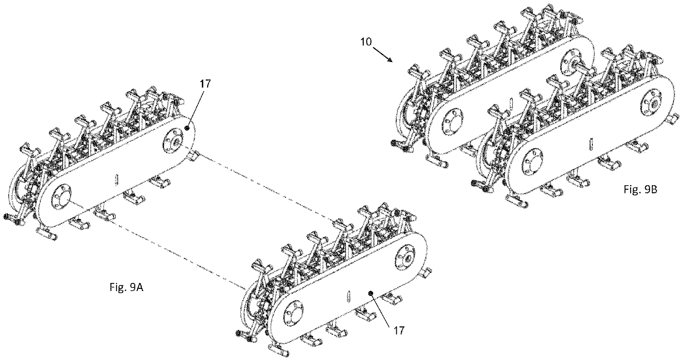

Figures 8A, **8B** show some more details of a ceiling unit 10 exhibiting three chassis 17 arranged laterally with respect to each other, wherein the chassis arranged there between (in the middle) does not exhibit any suspension elements but counter bearings 16, and **Figures 9A**, **9B** show some more details of a ceiling unit 10 exhibiting two chassis 17 (each without counter bearing). In the embodiment shown in Fig. 8, the second chassis provides for counter bearings 16 which are coupled to the chain 15a, i.e., the first circumferential track provides for positioning and motion (resp. path of motion) of the counter bearings 16. It should be noted that in the embodiment shown in these figures, theses counter bearings 16 are intended for interfering with the structure only at a face side, and therefore, no de-/coupling kinematics are provided in context with these counter bearings 16. Therefore, there is no need for provision of any further second circumferential track at/for the second chassis arranged in the middle. Thus, in this embodiment, the second chassis arranged in the middle and accommodating (only) the counter bearings only exhibits a/the first circumferential track.

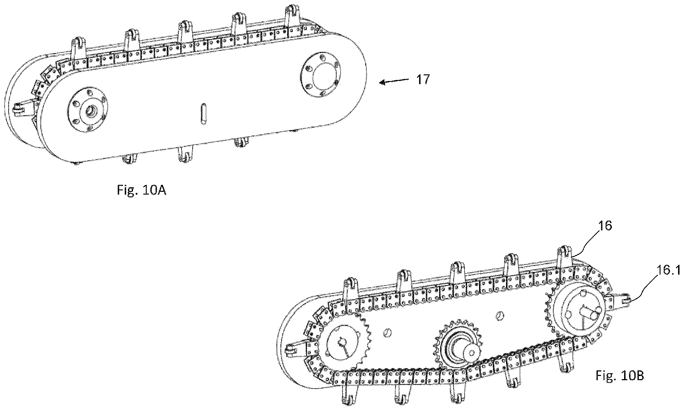

**Figures 10A, 10B** show some details of a chassis only accommodating counter bearings but no suspension elements.

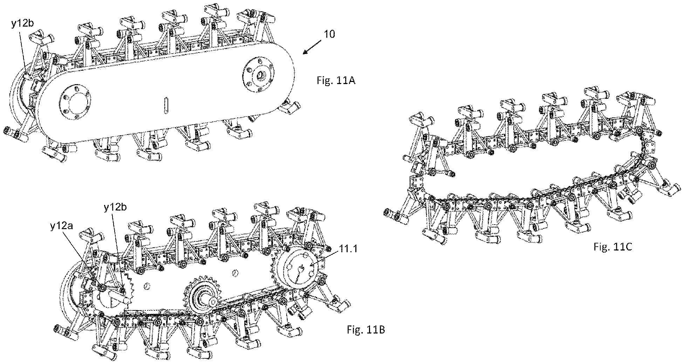

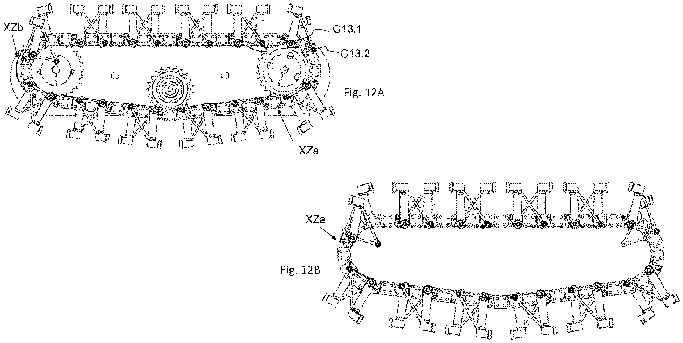

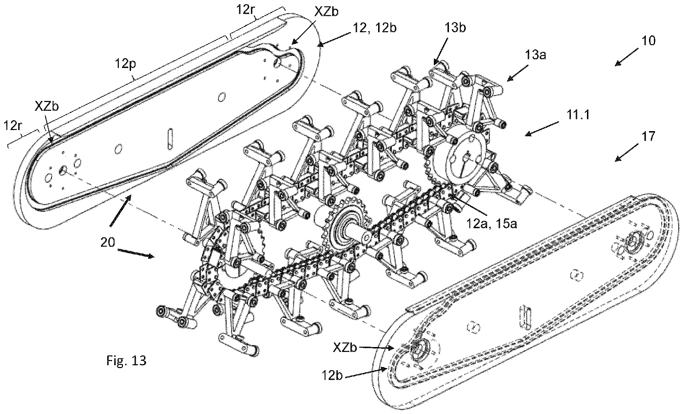

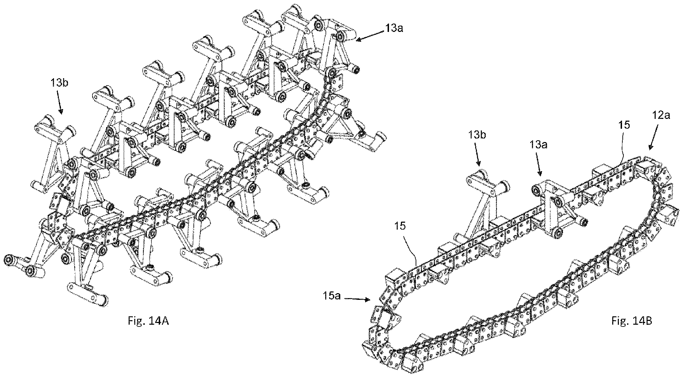

**Figures 11A, 11B, 11C** and **Figures 12A, 12B** and **Figure 13** and **Figures 14A**, 14B show some kinematic aspects of chassis accommodating/arranging/guiding both suspension elements 13 and further suspension elements 13b. Fig. 13 also illustrates that one (each) chassis 17 may comprise the first circumferential track (here: provided/defined by the chain 15a) and two second circumferential tracks 12b, wherein these two second circumferential tracks 12b are arranged asymmetrically, i.e., the shape/contour XZb is asymmetrical. Such an arrangement also allows for providing de-/coupling kinematics for both a plurality of suspension elements 13a of a first type and a plurality of further suspension elements 13b of a second type, especially in such a manner that both types of suspension elements 13a, 13b may interact and engage in the same (but asymmetrical) manner with the structure 1, especially at the same profile rail at opposite lateral sides, respectively. Such an arrangement may also ensure a high security and stability level already by means of one single drive unit 11. Thus, scaling (two, three or even more) of the ceiling unit's components (e.g. of the drives) is realizable in even more flexible manner, and individual arrangements can be optimized for each application.

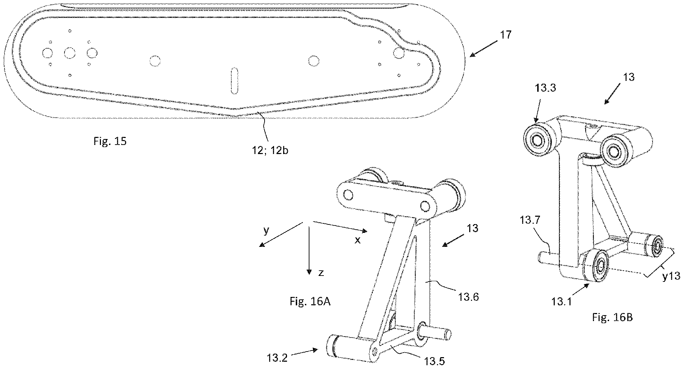

It should be noted that the first circumferential track resp. a/the chain may/can provide for guiding and driving both the suspension elements 13a and the further suspension elements 13b; both types of suspension elements 13a, 13b can be coupled, e.g., via a protruding axial section (guiding bolt or shaft) 13.7 to the chain structure (cf. Fig. 16B) which protrudes vis-à-vis of the first pulley 13.1, especially along its axis. In particular, the suspension elements 13a and the further suspension elements 13b are arranged with longitudinal offset (y) and mirror-inverted on both sides of the chain 15a. In particular, the longitudinal distance (y) of the respective suspension element 13a and the respective further suspension element 13b of a respective pair of suspension elements 13, 13b corresponds to the extension in cross direction (y) of each element/profile of the (ceiling) structure.

**Figure 15** also shows a guiding plank or rail allowing for guiding the first circumferential track resp. the chain more precisely.

**Figures 16A, 16B** show a further embodiment of suspension elements 13, wherein in comparison with the suspension elements described above in context with Fig. 3, these suspension elements exhibit two wheels or pulleys 13.3 arranged and configured for interacting with the structure 1, and these suspension elements may also exhibit a further pulley which is suspended around an axis extending in the z-direction (as shown in Fig. 16B). That optional further pulley may ensure further/improved support and guiding with respect to the structure.

It should be noted that the reference signs 13a, 13b are introduced in order to differentiate between different orientations and alignments and paths of motion of subsets of suspension elements (in built-in situation); nonetheless, suspension elements 13a and suspension elements 13b can be of similar design.

In **Fig. 6A**, **10A**, **11C**, a contact point distance provided by different protruding distances of the suspension element's contact point P13 and of the counter bearing's contact point (free end, especially wheel/pulley) is illustrated by referring to the relative arrangement at the (ceiling) structure, respectively.

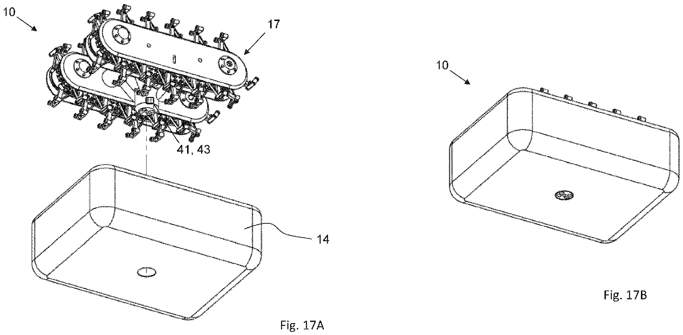

In **Fig. 17A**, **17B** the ceiling unit 10 is encased by a casing 14 providing for protection of the ceiling unit's kinematics and of the suspension elements especially in front and at a rear end of the ceiling unit. Such casing can be useful also in case several ceiling units autonomously travel within the same arrangement 100 resp. at the same ceiling structure 1.

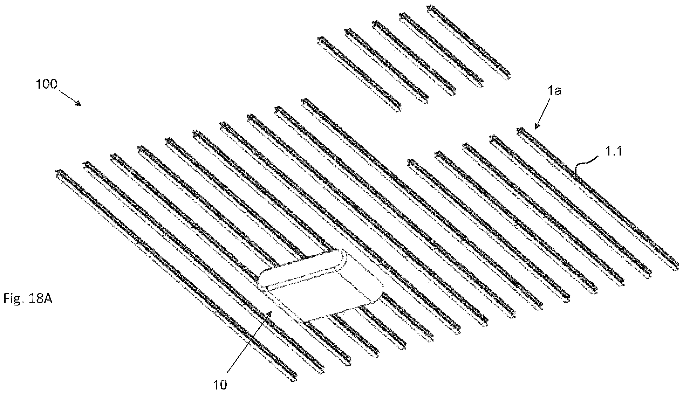

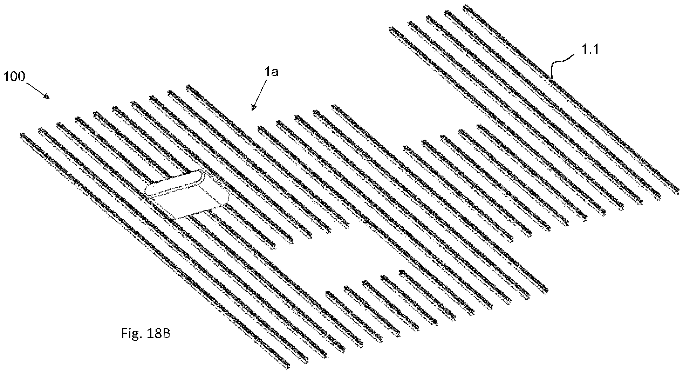

**Fig. 18A****,** **18B** show an arrangement 100 in which the profile units 1.1 are arranged only in predefined sections of the ceiling (there remain some areas which are not equipped with profile units, i.e., there is no need to reach these areas by any ceiling unit); alternatively or in addition, the profile units 1.1 can be arranged according to at least two different structural regularities.

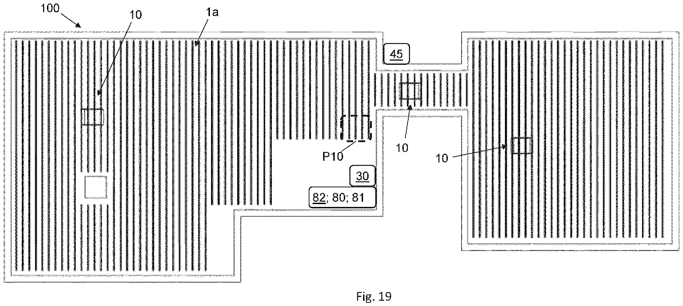

An arrangement 100 according to **Fig. 19** also comprises a central control unit 30 communicating with each ceiling unit 10 (which each may comprise a decentral control unit or at least one drive wirelessly communicating with the central control unit), and control commands can also be defined by a positioning system 45, communicating e.g. based on near filed, mobile network, LAN, LP-WAN, SigFox, NBIoT. Data of at least one digital twin 80, 81 referring to a respective ceiling unit and/or to a respective package can be stored in a database 82 and can be accessed and processed in order to define further control commands. Each ceiling unit 10 may (autonomously) reach an energy charging point/position P10 for loading an energy storage unit 19. Alternatively or in addition, energy can be transferred via at least some of the profile units and suspension elements, as described above.

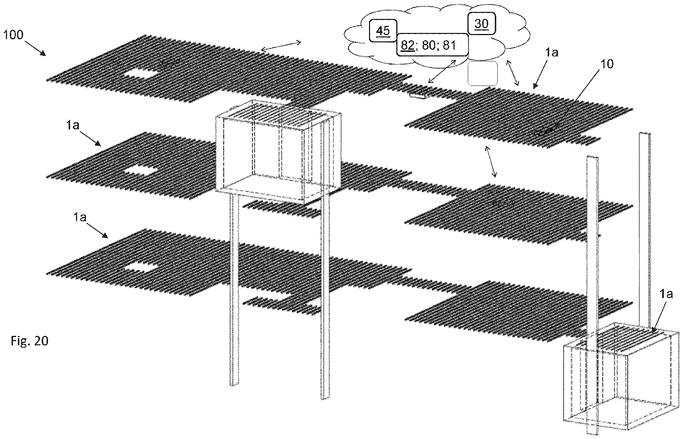

In the embodiment according to **Fig. 20**, the ceiling suspension arrangement extends on different levels of altitude which are connected by means of at least one elevator exhibiting an elevator ceiling structure geometrically corresponding to/with the ceiling structure 1 of the ceiling suspension arrangement 100, wherein the ceiling structure merges/transitions to the elevator ceiling structure, thereby providing for interconnection of different levels of altitude. Such a configuration can also be favourable in buildings, e.g. in case the respective ceiling unit should (autonomously) access several areas on different levels of altitude.

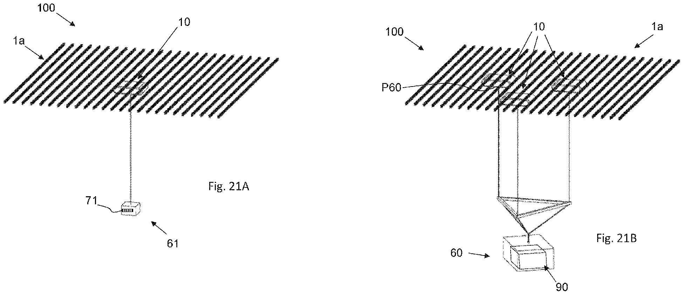

In **Fig. 21A**, **21B**, one or several crawler type ceiling units 10 carry a load resp. an object 60 or package 61 which can be identified by means of at least one identification feature 71. The package 61 can be stored in an accommodating cavity 90 of the object 60 (or in an accommodating cavity of the ceiling unit 10). Thus, the positioning system 45 can ensure traveling and positioning of each ceiling unit 10 according to predefined paths of motion e.g. in order to deliver a package or postal items or the like.

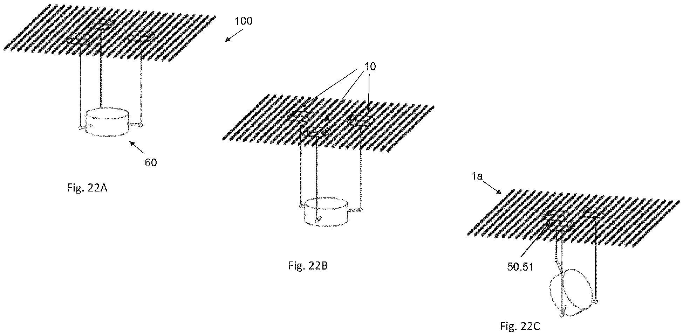

In a configuration shown in **Fig. 22A**, **22B**, **22C**, several crawler type ceiling units 10 conjointly carry and handle a load resp. an object 60, wherein at least one of the ceiling units 10 (preferably each ceiling unit) also comprises a hoist unit 50 allowing for vertically positioning the object 60. Preferably, a traction mechanism 51 (especially rope winch) of the hoist unit is controlled via a/the decentral control unit of the respective ceiling unit and/or via a central control unit of the arrangement 100.

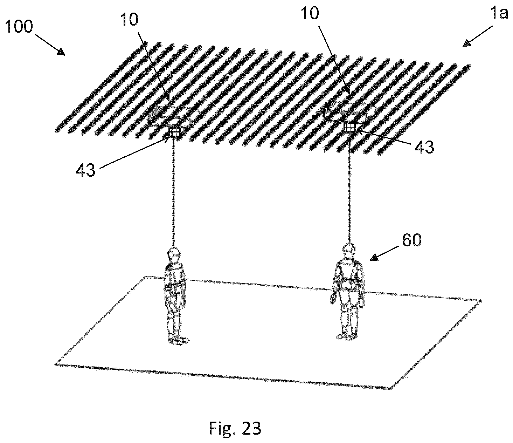

**Figure 23** illustrates an application in which two crawler type ceiling units 10 respectively handle an individual 60, e.g. in context with gravity offloading based on active force exertion. Each ceiling unit 10 exhibits at least one force sensor 43.

### List of reference signs

1 ceiling structure
1a structural regularity or raster defined by the ceiling structure
1.1 profile unit, especially T-profile resp. T-rail
1.2 wheel tread
1.3 power rail
10 crawler type ceiling unit
11 drive unit (motor, actuator), especially chain drive
11.1 drive mechanism
11a first drive
11b further (second) drive
11c further (third) drive
12 circumferential track
12a first circumferential track, especially comprising a chain
12b second circumferential track
12p parallel section / linear section of the track
12r redirection section / curved section of the track
13 suspension element resp. chain element
13a first suspension element resp. chain element (first type)
13b further suspension element (second type, especially mirror-inverted)
13.1, 13.2 first pulley, second pulley
13.3 wheel
13.4 current collector resp. power-slider (conductive slider for energy transfer)
13.5 lever arm
13.6 protruding section / suspension arm
13.7 protruding axial section (guiding bolt or shaft)
14 casing15 longitudinal connecting element, especially chain element
15a closed loop of interrelated suspension elements, especially chain
16 counter bearing
16.1 wheel, pulley
17 housing or chassis
18 gear unit
18a further gear unit
19 energy storage unit
20 de-/coupling kinematics
30 central control unit
31 decentral (individual) control unit
35 communicating unit (e.g. near filed, mobile network, LAN, LP-WAN, SigFox, NBIoT)
36 transmitter (active or passive), especially for transmitting locating signals
40 sensor arrangement
41 sensing device
43 sensor
45 positioning system, e.g. based on near filed, mobile network, LAN, LP-WAN, SigFox, NBIoT
50 hoist unit
51 traction mechanism, especially rope winch
53 transmission means, especially rope
60 external load, especially object or individual
61 package, e.g. including consumables, food, postal items
70 identification feature referring to ceiling unit, especially code (e.g. including a number)
71 identification feature referring to package, especially code (e.g. including a number)
80 digital twin referring to a respective ceiling unit
81 digital twin referring to a respective package
82 database
90 accommodating cavity
100 ceiling suspension arrangement
G13.1 first guiding point or axis (coupling the first track and the suspension element)
G13.2 second guiding point or axis (coupling the second track and the suspension element)
P10 energy charging point/position
P13 contacting/bearing point/area of the suspension element with the ceiling structure
P60 attachment point
XZa shape/contour of the first circumferential track
XZb shape/contour of the second circumferential track
y12a predefined first longitudinal positions
y12b predefined second longitudinal positions
y13 longitudinal extension of lever arm
x first spatial direction: direction of longitudinal extension of profile units
y second spatial direction: longitudinal direction resp. alignment of the circumferential tracks
z third spatial direction, especially vertical direction

## Claims

1. Ceiling suspension arrangement (100) exhibiting at least one crawler type ceiling unit (10) and a ceiling structure (1) extending in at least two spatial directions (x, y), wherein the ceiling structure (1) comprises a plurality of profile units (1.1) extending in a first spatial direction (x), wherein the ceiling structure (1) defines at least one structural regularity (1a) in a second spatial direction (y); and wherein the crawler type ceiling unit (10) exhibits a plurality of suspension elements (13, 13a, 13b) configured for suspending the ceiling unit and configured for coupling the crawler type ceiling unit (10) to the ceiling structure (1) by means of de-/coupling kinematics depending on a relative motion of the crawler type ceiling unit with respect to the ceiling structure (1) in at least said second spatial direction, wherein the crawler type ceiling unit exhibits at least two circumferential tracks (12, 12a, 12b), wherein the suspension elements (13, 13a, 13b) are attached to the circumferential tracks (12, 12a, 12b) at predefined longitudinal positions corresponding to the structural regularity (1a), wherein the circumferential tracks (12, 12a, 12b) respectively define a specific path of circumferential motion of the respective suspension elements (13, 13a, 13b), thereby providing for de-/coupling kinematics during a motion of the crawler type ceiling unit (10) in said second spatial direction, especially with the crawler type ceiling unit (10) being configured to be moved in said first spatial direction along the profile units (1.1) irrespective of momentary motion in said second spatial direction.

2. Ceiling suspension arrangement (100) according to claim 1, wherein the ceiling suspension arrangement (100) is configured for at least passive motion of the crawler type ceiling unit (10) in said at least two spatial directions, and/or wherein the crawler type ceiling unit (10) is configured for at least two-dimensional arbitrary motion in arbitrary directions defined by said at least two spatial directions.

3. Ceiling suspension arrangement (100) according to any preceding claim, wherein the crawler type ceiling unit (10) is configured for enabling at least one closed loop trajectory of respective suspension elements (13a, 13b) along corresponding circumferential tracks (12a, 12b), especially configured for enabling at least two closed loop trajectories of at least two subsets of respective suspension elements (13a, 13b);
**and/or** wherein a respective subset of said suspension elements (13a, 13b) are connected to each other by means of longitudinal connecting elements, especially by chain elements, thereby forming a closed loop of interrelated suspension elements (13a, 13b) distanced to each other in a/the predefined structural regularity (1a);
**and/or** wherein the circumferential tracks (12a, 12b) are shaped in such a manner that the respective suspension elements (13a, 13b) are de-/coupled from/into the ceiling structure (1) when passing a curved section of the tracks;
**and/or** wherein the suspension elements (13a, 13b) are fixedly attached/coupled by means of a first pulley to/with a/the first circumferential track and are guided within a/the second circumferential track by means of a second pulley respectively, wherein the first and second pulley preferably are arranged at a lever arm of the respective suspension element;
**and/or** wherein the crawler type ceiling unit (10) is configured for lifting a/the respective suspension elements (13a, 13b) out of the structure in an unloaded state, especially such that both de-/coupling kinematics for a subset of momentarily unloaded suspension elements and suspension of the crawler type ceiling unit (10) by a subset of momentarily loaded suspension elements is ensured.

4. Ceiling suspension arrangement (100) according to any preceding claim, wherein the crawler type ceiling unit (10) exhibits at least two kinds/types of suspension elements (13a, 13b), wherein the different types of suspension elements are de-/coupled according to individual kinematics, wherein a first subset of the suspension elements (13a) are attached to a first pair of circumferential tracks (12a, 12b) and at least one further subset of the suspension elements (13b) are attached to a second pair of circumferential tracks (12a, 12b) respectively at predefined first and second longitudinal positions respectively corresponding to the structural regularity (1a).

5. Ceiling suspension arrangement (100) according to any preceding claim, wherein the crawler type ceiling unit (10) exhibits at least one load attachment point configured for transferring loads of an external load attached to the crawler type ceiling unit (10); **and/or** wherein the crawler type ceiling unit (10) exhibits at least one hoist unit, or the ceiling suspension arrangement (100) exhibits at least two crawler type ceiling units (10) each exhibiting at least one hoist unit, wherein the hoist unit is configured for transferring loads of an external load to the ceiling structure (1).

6. Ceiling suspension arrangement (100) according to any preceding claim, wherein the crawler type ceiling unit (10) exhibits at least one drive interacting with at least one of the circumferential tracks (12a, 12b), wherein the ceiling suspension arrangement (100) is configured for a predefinable driven/driving motion of the crawler type ceiling unit (10) at least in said second spatial direction;
**and/or** wherein the crawler type ceiling unit (10) exhibits an energy storage unit providing energy to a/the at least one drive of the crawler type ceiling unit (10), especially to a/the at least one drive interacting with at least one of the circumferential tracks (12a, 12b).

7. Ceiling suspension arrangement (100) according to any preceding claim, wherein the ceiling suspension arrangement (100) exhibits a sensing device exhibiting at least one sensor from the following group: speed sensor, distance sensor, position measuring sensor, force sensor, acceleration sensor resp. gyroscope; wherein the ceiling suspension arrangement (100) is configured for controlling the at least one crawler type ceiling unit (10) based on momentary measuring data of the at least one sensor;
**and/or** wherein the crawler type ceiling unit (10) exhibits a communicating unit configured for wireless communication at least within the ceiling suspension arrangement (100), wherein the crawler type ceiling unit (10) exhibits an energy storage unit providing energy to the communicating unit, especially such that the crawler type ceiling unit (10) is energetically self-sustaining for at least a period of several days or weeks or month;
**and/or** wherein the ceiling suspension arrangement (100) is configured for localizing individual crawler type ceiling units based on at least one locating signal transmitted by individual crawler type ceiling units.

8. Ceiling suspension arrangement (100) according to any preceding claim, wherein each suspension element exhibits at least one element of motion arranged and configured for moving the crawler type ceiling unit (10) in said first spatial direction, wherein the crawler type ceiling unit (10) exhibits at least two drives interacting with both at least one of the circumferential tracks (12a, 12b) and with said elements of motion, wherein the ceiling suspension arrangement (100) is configured for a predefinable two-dimensional driven motion of the crawler type ceiling unit (10) in said spatial directions.

9. Ceiling suspension arrangement (100) according to any preceding claim, wherein the profile units (1.1) of the ceiling suspension arrangement (100) are arranged according to at least two different structural regularities respectively with respect to said second spatial direction, namely a first structural regularity (1a) defining a/the relative distance of the profile units (1.1) matching with the relative distance of the suspension elements (13a, 13b) attached at the tracks, and a second structural regularity being a whole-number multiple of said first structural regularity (1a), wherein the number of momentarily engaging/coupling suspension elements (13a, 13b) preferably is at least two within a/the overlapping area of the second structural regularity, and wherein a/the area of the first structural regularity (1a) preferably has a first load-bearing capacity and the area of the second structural regularity has a second load-bearing capacity;
**and/or** wherein the profile units (1.1) of the ceiling suspension arrangement (100) spatially define at least two different allowable loads in at least two spatial sections of the ceiling suspension arrangement (100) along the ceiling;
**and/or** wherein the ceiling suspension arrangement (100) is coupled with/to a further ceiling suspension arrangement (100), wherein the profile units (1.1) of the ceiling suspension arrangement (100) are arranged according to a first structural regularity (1a), wherein the profile units (1.1) of the further ceiling suspension arrangement (100) are arranged according to a second structural regularity, wherein the second structural regularity is a whole-number multiple of said first structural regularity (1a).

10. Ceiling suspension arrangement (100) according to any preceding claim, wherein the ceiling suspension arrangement (100) exhibits a plurality of crawler type ceiling units each exhibiting at least one attachment point or hoist unit each being configured for transferring loads of an external load of at least 50kg or 100kg to the ceiling structure (1), wherein the ceiling suspension arrangement (100) is configured for arranging a plurality of external loads in individual two-dimensional or three-dimensional positions with respect to each other, especially respectively being attached at one crawler type ceiling unit (10);
**or** wherein the crawler type ceiling unit (10) exhibits at least one attachment point or hoist unit structurally connected with at least one of the circumferential tracks (12a, 12b), wherein the crawler type ceiling unit (10) is configured for transferring loads of an external load of at least 200kg or 500kg to the ceiling structure (1), wherein the ceiling suspension arrangement (100) is configured for at least two-dimensional transportation/movement of at least one individual suspended via the attachment point or hoist unit along the ceiling structure (1);
**or** wherein the crawler type ceiling unit (10) exhibits at least one attachment point or hoist unit structurally connected with at least one of the circumferential tracks (12a, 12b), wherein the crawler type ceiling unit (10) is configured for transferring loads of an external load of at least 1.000kg or 10.000kg to the ceiling structure (1), wherein the ceiling suspension arrangement (100) is configured for at least two-dimensional transportation/movement of the external load being suspended via the attachment point or hoist unit along the ceiling structure (1);
**or** wherein the ceiling suspension arrangement (100) exhibits a plurality of crawler type ceiling units each exhibiting at least one attachment point or hoist unit each being configured for transferring loads of an external load to the ceiling structure (1), wherein the ceiling suspension arrangement (100) is configured for controlling the one- or two-dimensional movement or path of motion of a subset of at least two of the crawler type ceiling units in dependence on each other, especially such that the crawler type ceiling units of the subset move analogously, especially by also controlling at least two hoists of the subset carrying the same external load;
**or** wherein the ceiling suspension arrangement (100) exhibits a plurality of crawler type ceiling units each exhibiting at least one accommodating cavity configured for accommodating at least one package, wherein the ceiling suspension arrangement (100) exhibits at least one control unit configured for wireless control resp. wireless data transmission, wherein the ceiling suspension arrangement (100) is configured for controlling the one- or two-dimensional movement or path of motion of a respective crawler type ceiling unit (10) and/or of a subset of at least two of the crawler type ceiling units in dependence on each other, especially such that the plurality of crawler type ceiling unit (10) simultaneously move according to a plurality of individual one- or two-dimensional paths of motion;
**or** wherein the crawler type ceiling unit (10) exhibits at least one attachment point or hoist unit each being configured for transferring loads of an external load to the ceiling structure (1), wherein the ceiling suspension arrangement (100) exhibits a sensing device exhibiting at least one sensor from the following group: force sensor, acceleration sensor resp. gyroscope; wherein the ceiling suspension arrangement (100) is configured for gravity offloading based on active force exertion in at least one spatial direction via the attachment point or hoist unit, wherein the amount of force is depending on effective gravity and/or effective load especially based on momentary data of the at least one force sensor, preferably with the amount of force being adjustable e.g. according to individual user commands.

11. Ceiling suspension arrangement (100) according to any preceding claim, wherein the at least one crawler type ceiling unit (10) exhibits at least one drive, wherein the ceiling suspension arrangement unit exhibits a control unit controlling the drive, wherein the ceiling suspension arrangement exhibits a sensing device exhibiting at least one sensor from the following group: speed sensor, distance sensor, position measuring sensor, force sensor, acceleration sensor resp. gyroscope; wherein the ceiling suspension arrangement is configured for controlling the at least one crawler type ceiling unit (10) based on momentary measuring data of the at least one sensor, especially for controlling an absolute or a relative position or state of motion of the at least one crawler type ceiling unit (10).

12. Ceiling suspension arrangement (100) according to any preceding claim, wherein the ceiling suspension arrangement (100) exhibits a plurality of crawler type ceiling units respectively exhibiting at least one sensor and a communicating unit communicating with a control unit of the ceiling suspension arrangement (100), wherein the ceiling suspension arrangement (100) is configured for predefining a plurality of individual paths of two-dimensional motion of respective crawler type ceiling units;
**or** wherein the ceiling suspension arrangement (100) exhibits a central control unit monitoring at least the momentary positions of the crawler type ceiling units of the ceiling suspension arrangement (100), wherein each crawler type ceiling unit (10) exhibits a communicating unit for wireless transmission of control signals to at least one drive or actuator of the respective crawler type ceiling unit (10);
**or** wherein the ceiling suspension arrangement (100) is configured for decentral control, wherein each crawler type ceiling unit (10) exhibits a sensing device providing momentary sensor data to at least one drive or actuator of the crawler type ceiling unit (10).

13. Ceiling suspension arrangement (100) according to any preceding claim, wherein the ceiling suspension arrangement (100) comprises a database configured for storing and accessing at least one digital twin of individual crawler type ceiling units and/or individual packages carried by crawler type ceiling units of the ceiling suspension arrangement (100), wherein the digital twin at least comprises information of momentary status, wherein the ceiling suspension arrangement (100) is configured to define at least one control parameter for individual crawler type ceiling units based on information of the at least one digital twin, especially for remotely controlling individual crawler type ceiling units.

14. Method of suspending or positioning at least one crawler type ceiling unit (10) at a ceiling structure (1) extending in at least two spatial directions for providing at least two degrees of freedom for at least two-dimensional positioning or two-dimensional motions of the crawler type ceiling unit (10) in suspended manner headlong the ceiling structure (1), especially in conjunction with actively moving/driving the crawler type ceiling unit (10) along the ceiling structure (1), especially by actively re-orientating the crawler type ceiling unit's traveling direction, especially in/with a ceiling suspension arrangement (100) according to any of the preceding claims 1 to 13, wherein the ceiling structure (1) comprises a plurality of profile units (1.1) extending in a first spatial direction, wherein the ceiling structure (1) defines at least one structural regularity (1a) in a second spatial direction; wherein the crawler type ceiling unit (10) is suspended by means of a plurality of suspension elements (13a, 13b) coupling the crawler type ceiling unit (10) to the ceiling structure (1) by means of de-/coupling kinematics depending on a relative motion of the ceiling unit with respect to the ceiling structure (1) in at least said second spatial direction, wherein the suspension elements (13a, 13b) are attached to and guided by at least two circumferential tracks (12a, 12b) of the crawler type ceiling unit (10), wherein the circumferential tracks (12a, 12b) respectively define a specific path of circumferential motion of the respective suspension elements (13a, 13b), thereby providing for decoupling kinematics which suspend and relatively move the respective suspension element with respect to the ceiling structure (1) during a relative motion of the crawler type ceiling unit (10) in said second spatial direction, especially with the crawler type ceiling unit (10) remaining movable in said first spatial direction along the profile units (1.1) irrespective of momentary motion in said second spatial direction.

15. Computer program comprising instructions which, when the program is executed by a computer, cause the computer to execute steps of the method according to the preceding method claim 14 in context with provision and control of the motion or relative/absolute positions of at least one crawler type ceiling unit (10), especially by controlling the at least one drive of at least one crawler type ceiling unit (10) interacting with at least one of the circumferential tracks (12a, 12b), especially based on momentary absolute and/or relative position data of the at least one crawler type ceiling unit (10).

## Patentansprüche

1. Deckenaufhängungsanordnung (100) mit mindestens einer raupenartigen Deckeneinheit (10) und einer sich in mindestens zwei Raumrichtungen (x, y) erstreckenden Deckenstruktur (1), wobei die Deckenstruktur (1) eine Vielzahl von Profileinheiten (1.1) aufweist, die sich in einer ersten Raumrichtung (x) erstrecken, wobei die Deckenstruktur (1) mindestens eine strukturelle Regelmäßigkeit (1a) in einer zweiten Raumrichtung (y) definiert; und wobei die raupenartige Deckeneinheit (10) eine Vielzahl von Aufhängungselementen (13, 13a, 13b) aufweist, die zum Aufhängen der Deckeneinheit und zum Koppeln der raupenartigen Deckeneinheit (10) mit der Deckenstruktur (1) mittels einer Ent-/Kopplungskinematik in Abhängigkeit von einer Relativbewegung der raupenartigen Deckeneinheit in Bezug auf die Deckenstruktur (1) in zumindest der zweiten Raumrichtung konfiguriert sind, wobei die raupenartige Deckeneinheit mindestens zwei Umfangsschienen (12, 12a, 12b) aufweist, wobei die Aufhängungselemente (13, 13a, 13b) an den Umfangsschienen (12, 12a, 12b) an vordefinierten, der strukturellen Regelmäßigkeit (1a) entsprechenden Längspositionen befestigt sind, wobei die Umfangsschienen (12, 12a, 12b) jeweils einen bestimmten Pfad der Umfangsbewegung der jeweiligen Aufhängungselemente (13, 13a, 13b) definieren, wodurch eine Entkopplungskinematik während einer Bewegung der raupenartigen Deckeneinheit (10) in der zweiten Raumrichtung bereitgestellt wird, insbesondere wenn die raupenartige Deckeneinheit (10) so konfiguriert ist, dass sie in der ersten Raumrichtung entlang der Profileinheiten (1.1) unabhängig von der momentanen Bewegung in der zweiten Raumrichtung zu bewegen.

2. Deckenaufhängungsanordnung (100) nach Anspruch 1, wobei die Deckenaufhängungsanordnung (100) für eine zumindest passive Bewegung der raupenartigen Deckeneinheit (10) in den zumindest zwei Raumrichtungen ausgebildet ist, und/oder wobei die raupenartige Deckeneinheit (10) für eine zumindest zweidimensionale willkürliche Bewegung in willkürlichen Richtungen ausgebildet ist, die durch die zumindest zwei Raumrichtungen definiert sind.

3. Deckenaufhängungsanordnung (100) nach einem der vorhergehenden Ansprüche, wobei die raupenartige Deckeneinheit (10) so konfiguriert ist, dass sie mindestens eine geschlossene Schleifenbahn von jeweiligen Aufhängungselementen (13a, 13b) entlang entsprechender Umfangsbahnen (12a, 12b) ermöglicht, insbesondere so konfiguriert ist, dass sie mindestens zwei geschlossene Schleifenbahnen von mindestens zwei Teilmengen von jeweiligen Aufhängungselementen (13a, 13b) ermöglicht;
**und/oder** wobei jeweils eine Teilmenge der Aufhängungselemente (13a, 13b) mittels Längsverbindungselementen, insbesondere durch Kettenelemente, miteinander verbunden sind, wodurch ein geschlossener Kreislauf von miteinander verbundenen Aufhängungselementen (13a, 13b) gebildet wird, die in einer/der vorgegebenen strukturellen Regelmäßigkeit (1a) zueinander beabstandet sind;
**und/oder** wobei die umlaufenden Bahnen (12a, 12b) so geformt sind, dass die jeweiligen Aufhängungselemente (13a, 13b) beim Passieren eines gekrümmten Abschnitts der Bahnen von/in die Deckenkonstruktion (1) ent- bzw. eingekoppelt werden;
**und/oder** wobei die Aufhängungselemente (13a, 13b) mittels einer ersten Umlenkrolle fest an/mit einer/der ersten Umfangsschiene befestigt/gekoppelt sind und mittels einer zweiten Umlenkrolle jeweils innerhalb einer/der zweiten Umfangsschiene geführt werden, wobei die erste und zweite Umlenkrolle vorzugsweise an einem Hebelarm des jeweiligen Aufhängungselements angeordnet sind;
**und/oder** wobei die raupenartige Deckeneinheit (10) zum Herausheben der jeweiligen Aufhängungselemente (13a, 13b) aus dem Bauwerk in einem unbelasteten Zustand ausgebildet ist, insbesondere derart, dass sowohl eine Entkopplungskinematik für eine Teilmenge von momentan unbelasteten Aufhängungselementen als auch eine Aufhängung der raupenartigen Deckeneinheit (10) durch eine Teilmenge von momentan belasteten Aufhängungselementen gewährleistet ist.

4. Deckenaufhängungsanordnung (100) nach einem der vorhergehenden Ansprüche, wobei die raupenartige Deckeneinheit (10) mindestens zwei Arten/Typen von Aufhängungselementen (13a, 13b) aufweist, wobei die verschiedenen Arten von Aufhängungselementen nach individuellen Kinematiken ent-/gekoppelt sind, wobei eine erste Teilmenge der Aufhängungselemente (13a) an einem ersten Paar von Umfangsschienen (12a, 12b) und mindestens eine weitere Teilmenge der Aufhängungselemente (13b) an einem zweiten Paar von Umfangsschienen (12a, 12b) jeweils an vordefinierten ersten und zweiten Längspositionen entsprechend der strukturellen Regelmäßigkeit (1a) befestigt sind.

5. Deckenaufhängungsanordnung (100) nach einem der vorhergehenden Ansprüche, wobei die raupenartige Deckeneinheit (10) mindestens einen Lastanschlagpunkt aufweist, der zur Übertragung von Lasten einer an der raupenartigen Deckeneinheit (10) angebrachten externen Last ausgebildet ist; **und/oder** wobei die raupenartige Deckeneinheit (10) mindestens eine Hubeinheit aufweist, oder die Deckenaufhängungsanordnung (100) mindestens zwei raupenartige Deckeneinheiten (10) aufweist, die jeweils mindestens eine Hubeinheit aufweisen, wobei die Hubeinheit zum Übertragen von Lasten einer externen Last auf die Deckenstruktur (1) konfiguriert ist.

6. Deckenaufhängungsanordnung (100) nach einem der vorhergehenden Ansprüche, wobei die raupenartige Deckeneinheit (10) mindestens einen mit mindestens einer der Umfangsschienen (12a, 12b) zusammenwirkenden Antrieb aufweist, wobei die Deckenaufhängungsanordnung (100) für eine vorgebbare Antriebs-/Antriebsbewegung der raupenartigen Deckeneinheit (10) zumindest in der zweiten Raumrichtung ausgebildet ist;
**und/oder** wobei das Raupenfahrwerk (10) einen Energiespeicher aufweist, der einen/den mindestens einen Antrieb des Raupenfahrwerks (10), insbesondere einen/den mindestens einen mit mindestens einer der Umfangsschienen (12a, 12b) zusammenwirkenden Antrieb, mit Energie versorgt.

7. Deckenaufhängungsanordnung (100) nach einem der vorhergehenden Ansprüche, wobei die Deckenaufhängungsanordnung (100) eine Sensoreinrichtung aufweist, die mindestens einen Sensor aus der folgenden Gruppe aufweist:
Geschwindigkeitssensor, Abstandssensor, Positionsmesssensor, Kraftsensor, Beschleunigungssensor bzw. Gyroskop; wobei die Deckenaufhängungsanordnung (100) zur Steuerung der mindestens einen raupenartigen Deckeneinheit (10) basierend auf momentanen Messdaten des mindestens einen Sensors ausgebildet ist;
**und/oder** wobei die raupenartige Deckeneinheit (10) eine Kommunikationseinheit aufweist, die zur drahtlosen Kommunikation zumindest innerhalb der Deckenaufhängungsanordnung (100) ausgebildet ist, wobei die raupenartige Deckeneinheit (10) eine Energiespeichereinheit aufweist, die die Kommunikationseinheit mit Energie versorgt, insbesondere derart, dass die raupenartige Deckeneinheit (10) zumindest für einen Zeitraum von mehreren Tagen oder Wochen oder Monaten energetisch autark ist;
**und/oder** wobei die Deckenaufhängungsanordnung (100) zur Lokalisierung einzelner raupenartiger Deckeneinheiten auf der Grundlage von mindestens einem von einzelnen raupenartigen Deckeneinheiten gesendeten Ortungssignal konfiguriert ist.

8. Deckenaufhängungsanordnung (100) nach einem der vorhergehenden Ansprüche, wobei jedes Aufhängungselement mindestens ein Bewegungselement aufweist, das zum Bewegen der raupenartigen Deckeneinheit (10) in der ersten Raumrichtung angeordnet und ausgebildet ist, wobei die raupenartige Deckeneinheit (10) mindestens zwei Antriebe aufweist, die sowohl mit mindestens einer der Umfangsschienen (12a, 12b) als auch mit den Bewegungselementen zusammenwirken, wobei die Deckenaufhängungsanordnung (100) für eine vorgebbare zweidimensionale Antriebsbewegung der raupenartigen Deckeneinheit (10) in den Raumrichtungen ausgebildet ist.

9. Deckenaufhängungsanordnung (100) nach einem der vorhergehenden Ansprüche, wobei die Profileinheiten (1.1) der Deckenaufhängungsanordnung (100) in Bezug auf die zweite Raumrichtung jeweils nach mindestens zwei unterschiedlichen Strukturregelmäßigkeiten angeordnet sind, nämlich einer ersten Strukturregelmäßigkeit (1a), die einen/den relativen Abstand der Profileinheiten (1.1) definiert, die mit dem relativen Abstand der an den Schienen befestigten Aufhängungselemente (13a, 13b) übereinstimmt, und eine zweite strukturelle Regelmäßigkeit, die ein ganzzahliges Vielfaches der ersten strukturellen Regelmäßigkeit (1a) ist, wobei die Anzahl der momentan eingreifenden/koppelnden Aufhängungselemente (13a, 13b) vorzugsweise mindestens zwei innerhalb eines/des Überlappungsbereichs der zweiten strukturellen Regelmäßigkeit ist, und wobei a/der Bereich der ersten strukturellen Regelmäßigkeit (1a) vorzugsweise eine erste Tragfähigkeit und der Bereich der zweiten strukturellen Regelmäßigkeit eine zweite Tragfähigkeit aufweist;
**und/oder** wobei die Profileinheiten (1.1) der Deckenabhängung (100) in mindestens zwei räumlichen Abschnitten der Deckenabhängung (100) entlang der Decke mindestens zwei unterschiedliche zulässige Lasten räumlich definieren;
**und/oder** wobei die Deckenaufhängungsanordnung (100) mit/an eine weitere Deckenabhängung (100) gekoppelt ist, wobei die Profileinheiten (1.1) der Deckenabhängung (100) nach einer ersten Strukturregelmäßigkeit (1a) angeordnet sind, wobei die Profileinheiten (1.1) der weiteren Deckenabhängung (100) nach einer zweiten Strukturregelmäßigkeit angeordnet sind, wobei die zweite Strukturregelmäßigkeit ein ganzzahliges Vielfaches der ersten Strukturregelmäßigkeit (1a) ist.

10. Deckenaufhängungsanordnung (100) nach einem der vorhergehenden Ansprüche, wobei die Deckenaufhängungsanordnung (100) eine Mehrzahl von raupenartigen Deckeneinheiten aufweist, die jeweils mindestens einen Befestigungspunkt oder eine Hebeeinheit aufweisen, der/die zum Übertragen von Lasten einer externen Last von mindestens 50 kg oder 100 kg auf die Deckenkonstruktion (1) ausgebildet ist, wobei die Deckenaufhängungsanordnung (100) zum Anordnen einer Mehrzahl von externen Lasten in einzelnen zweidimensionalen oder dreidimensionalen Positionen zueinander ausgebildet ist, die insbesondere jeweils an einer raupenartigen Deckeneinheit (10) befestigt sind; **oder** wobei die raupenartige Deckeneinheit (10) mindestens einen Befestigungspunkt oder eine Hebeeinheit aufweist, der/die baulich mit mindestens einer der Umfangsschienen (12a, 12b) verbunden ist, wobei die raupenartige Deckeneinheit (10) zum Übertragen von Lasten einer externen Last von mindestens 200 kg oder 500 kg auf die Deckenstruktur (1) konfiguriert ist, wobei die Deckenaufhängungsanordnung (100) zum mindestens zweidimensionalen Transport/Bewegen von mindestens einer über den Befestigungspunkt oder die Hebeeinheit aufgehängten Person entlang der Deckenstruktur (1) konfiguriert ist;
**oder** wobei die raupenartige Deckeneinheit (10) mindestens einen Befestigungspunkt oder eine Hebeeinheit aufweist, der/die baulich mit mindestens einer der Umfangsschienen (12a, 12b) verbunden ist, wobei die raupenartige Deckeneinheit (10) zum Übertragen von Lasten einer externen Last von mindestens 1.000 kg oder 10.000 kg auf die Deckenkonstruktion (1) konfiguriert ist, wobei die Deckenaufhängungsanordnung (100) für einen mindestens zweidimensionalen Transport/eine mindestens zweidimensionale Bewegung der externen Last konfiguriert ist, die über den Befestigungspunkt oder die Hebeeinheit entlang der Deckenkonstruktion (1) aufgehängt ist;
**oder** wobei die Deckenaufhängungsanordnung (100) eine Mehrzahl von raupenartigen Deckeneinheiten aufweist, die jeweils mindestens einen Befestigungspunkt oder eine Hebeeinheit aufweisen, die jeweils zum Übertragen von Lasten einer externen Last auf die Deckenkonstruktion (1) ausgebildet sind, wobei die Deckenaufhängungsanordnung (100) dazu ausgebildet ist, die ein- oder zweidimensionale Bewegung bzw. Bewegungsbahn einer Teilmenge von mindestens zwei der raupenartigen Deckeneinheiten in Abhängigkeit voneinander zu steuern, insbesondere derart, dass sich die raupenartigen Deckeneinheiten der Teilmenge analog bewegen, insbesondere auch durch Steuerung von mindestens zwei Hebezeugen der Teilmenge, die dieselbe externe Last tragen;
**oder** wobei die Deckenaufhängungsanordnung (100) eine Mehrzahl von raupenartigen Deckeneinheiten aufweist, die jeweils mindestens einen Aufnahmehohlraum aufweisen, der zur Aufnahme mindestens eines Packstücks ausgebildet ist, wobei die Deckenaufhängungsanordnung (100) mindestens eine Steuereinheit aufweist, die zur drahtlosen Steuerung bzw. drahtlosen Datenübertragung ausgebildet ist, wobei die Deckenaufhängungsanordnung (100) zur Steuerung der ein- oder zweidimensionalen Bewegung oder Bewegungsbahn einer jeweiligen raupenartigen Deckeneinheit (10) und/oder einer Teilmenge von mindestens zwei der raupenartigen Deckeneinheiten (10) ausgebildet ist. die Deckenaufhängungsanordnung (100) mindestens eine zur drahtlosen Steuerung bzw. drahtlosen Datenübertragung ausgebildete Steuereinheit aufweist, wobei die Deckenaufhängungsanordnung (100) zur Steuerung der ein- oder zweidimensionalen Bewegung bzw. Bewegungsbahn einer jeweiligen raupenartigen Deckeneinheit (10) und/oder einer Teilmenge von mindestens zwei der raupenartigen Deckeneinheiten in Abhängigkeit voneinander ausgebildet ist, insbesondere derart, dass sich die Mehrzahl der raupenartigen Deckeneinheiten (10) gleichzeitig gemäß einer Mehrzahl von individuellen ein- oder zweidimensionalen Bewegungsbahnen bewegen;
**oder** wobei die raupenartige Deckeneinheit (10) mindestens einen Anschlagpunkt oder eine Hubeinheit aufweist, die jeweils zur Lasteinleitung einer externen Last in die Deckenkonstruktion (1) ausgebildet sind, wobei die Deckenaufhängung (100) eine Sensoreinrichtung aufweist, die mindestens einen Sensor aus der Gruppe Kraftsensor, Beschleunigungssensor bzw. Gyroskop aufweist; wobei die Deckenaufhängung (100) zur Schwerkraftentlastung aufgrund aktiver Kraftausübung in mindestens einer Raumrichtung über den Anschlagpunkt oder die Hubeinheit ausgebildet ist, wobei die Höhe der Kraft von der Raumrichtung abhängig ist. Beschleunigungssensor bzw. Gyroskop aufweist; wobei die Deckenaufhängungsanordnung (100) zur Schwerkraftentlastung aufgrund aktiver Kraftausübung in mindestens einer Raumrichtung über den Anschlagpunkt bzw. die Hubeinheit ausgebildet ist, wobei die Höhe der Kraft von der effektiven Schwerkraft und/oder der effektiven Last insbesondere aufgrund von Momentandaten des mindestens einen Kraftsensors abhängig ist, wobei die Höhe der Kraft vorzugsweise z.B. nach individuellen Benutzerbefehlen einstellbar ist.

11. Deckenaufhängungsanordnung (100) nach einem der vorhergehenden Ansprüche, wobei die mindestens eine raupenartige Deckeneinheit (10) mindestens einen Antrieb aufweist, wobei die Deckenaufhängungsanordnungseinheit eine den Antrieb steuernde Steuereinheit aufweist, wobei die Deckenaufhängungsanordnung eine Sensoreinrichtung aufweist, die mindestens einen Sensor aus der folgenden Gruppe aufweist: Geschwindigkeitssensor, Wegsensor, Positionsmesssensor, Kraftsensor, Beschleunigungssensor bzw. Gyroskop; wobei die Deckenaufhängungsanordnung dazu eingerichtet ist, die mindestens eine raupenartige Deckeneinheit (10) aufgrund von momentanen Messdaten des mindestens einen Sensors zu steuern, insbesondere einen absoluten oder relativen Sensor zu steuern. Gyroskop aufweist; wobei die Deckenaufhängungsanordnung zur Steuerung der mindestens einen raupenartigen Deckeneinheit (10) basierend auf momentanen Messdaten des mindestens einen Sensors, insbesondere zur Steuerung einer absoluten oder einer relativen Position oder eines Bewegungszustandes der mindestens einen raupenartigen Deckeneinheit (10), ausgebildet ist.

12. Deckenaufhängungsanordnung (100) nach einem der vorhergehenden Ansprüche, wobei die Deckenaufhängungsanordnung (100) eine Mehrzahl von raupenartigen Deckeneinheiten aufweist, die jeweils mindestens einen Sensor und eine mit einer Steuereinheit der Deckenaufhängungsanordnung (100) kommunizierende Kommunikationseinheit aufweisen, wobei die Deckenaufhängungsanordnung (100) zur Vorgabe einer Mehrzahl von individuellen Pfaden der zweidimensionalen Bewegung der jeweiligen raupenartigen Deckeneinheiten ausgebildet ist;
**oder** wobei die Deckenaufhängungsanordnung (100) eine zentrale Steuereinheit aufweist, die zumindest die momentanen Positionen der raupenartigen Deckeneinheiten der Deckenaufhängungsanordnung (100) überwacht, wobei jede raupenartige Deckeneinheit (10) eine Kommunikationseinheit zur drahtlosen Übertragung von Steuersignalen an mindestens einen Antrieb oder Aktuator der jeweiligen raupenartigen Deckeneinheit (10) aufweist;
**oder** wobei die Deckenaufhängung (100) zur dezentralen Steuerung ausgebildet ist, wobei jedes Deckenfahrwerk (10) eine Sensoreinrichtung aufweist, die momentane Sensordaten an mindestens einen Antrieb oder Aktor der Deckeneinheit (10) liefert.

13. Deckenaufhängungsanordnung (100) nach einem der vorhergehenden Ansprüche, wobei die Deckenaufhängungsanordnung (100) eine Datenbank umfasst, die zum Speichern und Zugreifen auf mindestens einen digitalen Zwilling einzelner raupenartiger Deckeneinheiten und/oder einzelner Pakete, die von raupenartigen Deckeneinheiten der Deckenaufhängungsanordnung (100) getragen werden, konfiguriert ist, wobei der digitale Zwilling mindestens Informationen über den momentanen Status umfasst, wobei die Deckenaufhängungsanordnung (100) konfiguriert ist, um mindestens einen Steuerparameter für einzelne raupenartige Deckeneinheiten auf der Grundlage von Informationen des mindestens einen digitalen Zwillings zu definieren, insbesondere zur Fernsteuerung einzelner raupenartiger Deckeneinheiten.

14. Verfahren zur Aufhängung bzw. Positionierung mindestens einer Deckeneinheit (10) an einer sich in mindestens zwei Raumrichtungen erstreckenden Deckenkonstruktion (1) zur Bereitstellung von mindestens zwei Freiheitsgraden für eine mindestens zweidimensionale Positionierung bzw. zweidimensionale Bewegung der Deckenfahrwageneinheit (10) hängend über der Deckenkonstruktion (1), insbesondere in Verbindung mit einem aktiven Bewegen/Fahren der raupenartigen Deckeneinheit (10) entlang der Deckenkonstruktion (1), insbesondere durch aktives Umlenken der Verfahrrichtung der raupenartigen Deckeneinheit, insbesondere in/mit einer Deckenaufhängungsanordnung (100) nach einem der vorhergehenden Ansprüche 1 bis 13, wobei die Deckenkonstruktion (1) eine Mehrzahl von Profileinheiten (1.1) aufweist, die sich in einer ersten Raumrichtung erstrecken, wobei die Deckenkonstruktion (1) in einer zweiten Raumrichtung mindestens eine Strukturregelmäßigkeit (1a) definiert; wobei die raupenartige Deckeneinheit (10) mittels einer Vielzahl von Aufhängungselementen (13a, 13b) aufgehängt ist, die die raupenartige Deckeneinheit (10) mit der Deckenstruktur (1) mittels einer Ent- /Kupplungskinematik koppeln, die von einer relativen Bewegung der Deckeneinheit in Bezug auf die Deckenstruktur (1) in mindestens der zweiten Raumrichtung abhängt, wobei die Aufhängungselemente (13a, 13b) an mindestens zwei Umfangsschienen (12a, 12b) der raupenartigen Deckeneinheit (10) angebracht und von diesen geführt werden, wobei die Umfangsschienen (12a, 12b) jeweils einen spezifischen Pfad der Umfangsbewegung der jeweiligen Aufhängungselemente (13a, 13b) definieren, wodurch eine Ent-/Entkopplungskinematik bereitgestellt wird, die das jeweilige Aufhängungselement in Bezug auf die Deckenstruktur (1) während einer Relativbewegung der raupenartigen Deckeneinheit (10) in der zweiten Raumrichtung aufhängt und relativ bewegt, insbesondere wobei die raupenartige Deckeneinheit (10) in der ersten Raumrichtung entlang der Profileinheiten (1.1) unabhängig von der momentanen Bewegung in der zweiten Raumrichtung beweglich bleibt.

15. Computerprogramm mit Befehlen, die bei Ausführung des Programms durch einen Computer den Computer veranlassen, Schritte des Verfahrens nach dem vorhergehenden Verfahrensanspruch 14 im Zusammenhang mit der Bereitstellung und Steuerung der Bewegung bzw. der relativen/absoluten Positionen mindestens einer raupenartigen Deckeneinheit (10), insbesondere durch Steuerung des mindestens einen Antriebs der mindestens einen raupenartigen Deckeneinheit (10), die mit mindestens einer der Umfangsketten (12a, 12b) zusammenwirkt, insbesondere auf der Grundlage von momentanen absoluten und/oder relativen Positionsdaten der mindestens einen raupenartigen Deckeneinheit (10),
auszuführen.

## Revendications

1. Dispositif de suspension de plafond (100) présentant au moins une unité de plafond de type à chenilles (10) et une structure de plafond (1) s'étendant dans au moins deux directions spatiales (x, y), dans laquelle la structure de plafond (1) comprend une pluralité d'unités de profil (1.1) s'étendant dans une première direction spatiale (x), dans laquelle la structure de plafond (1) définit au moins une régularité structurelle (1a) dans une deuxième direction spatiale (y) ; et dans lequel l'unité de plafond de type à chenilles (10) présente une pluralité d'éléments de suspension (13, 13a, 13b) configurés pour suspendre l'unité de plafond et configurés pour coupler l'unité de plafond de type à chenilles (10) à la structure de plafond (1) au moyen d'une cinématique de dé/couplage dépendant d'un mouvement relatif de l'unité de plafond de type à chenilles par rapport à la structure de plafond (1) dans au moins ladite deuxième direction spatiale, dans lequel l'unité de plafond à chenilles présente au moins deux voies circonférentielles (12, 12a, 12b), dans lequel les éléments de suspension (13, 13a, 13b) sont fixés aux voies circonférentielles (12, 12a, 12b) à des positions longitudinales prédéfinies correspondant à la régularité structurelle (1a), les voies circonférentielles (12, 12a, 12b) définissant respectivement une trajectoire spécifique de mouvement circonférentiel des éléments de suspension respectifs (13, 13a, 13b), ce qui permet d'obtenir un mouvement circonférentiel spécifique des éléments de suspension respectifs (13, 13a, 13b), 13a, 13b), ce qui permet de découpler la cinématique pendant un mouvement de l'unité de plafond de type à chenilles (10) dans ladite deuxième direction spatiale, en particulier avec l'unité de plafond de type à chenilles (10) configurée pour être déplacée dans ladite première direction spatiale le long des unités de profil (1.1), indépendamment d'un mouvement momentané dans ladite deuxième direction spatiale.

2. Dispositif de suspension de plafond (100) selon la revendication 1, dans lequel le dispositif de suspension de plafond (100) est configuré pour un mouvement au moins passif de l'unité de plafond de type à chenilles (10) dans lesdites au moins deux directions spatiales, et/ou dans lequel l'unité de plafond de type à chenilles (10) est configurée pour un mouvement arbitraire au moins bidimensionnel dans des directions arbitraires définies par lesdites au moins deux directions spatiales.

3. Dispositif de suspension de plafond (100) selon l'une quelconque des revendications précédentes, dans lequel l'unité de plafond de type chenille (10) est configurée pour permettre au moins une trajectoire en boucle fermée d'éléments de suspension respectifs (13a, 13b) le long de pistes circonférentielles correspondantes (12a, 12b), en particulier configurée pour permettre au moins deux trajectoires en boucle fermée d'au moins deux sous-ensembles d'éléments de suspension respectifs (13a, 13b) ;
**et/ou** dans lequel un sous-ensemble respectif de ces éléments de suspension (13a, 13b) sont reliés les uns aux autres au moyen d'éléments de liaison longitudinaux, en particulier des éléments de chaîne, formant ainsi une boucle fermée d'éléments de suspension interdépendants (13a, 13b) distants les uns des autres selon une régularité structurelle prédéfinie (1a) ;
**et/ou** dans lequel les rails circonférentiels (12a, 12b) sont façonnés de manière à ce que les éléments de suspension respectifs (13a, 13b) soient découplés de/à l'intérieur de la structure du plafond (1) lorsqu'ils passent une section incurvée des rails ;
**et/ou** dans lequel les éléments de suspension (13a, 13b) sont fixés/couplés au moyen d'une première poulie à/avec une première voie circonférentielle et sont guidés dans une seconde voie circonférentielle au moyen d'une seconde poulie respectivement, la première et la seconde poulie étant de préférence disposées au niveau d'un bras de levier de l'élément de suspension respectif ;
**et/ou** dans lequel l'unité de plafond de type chenille (10) est configurée pour soulever un/les éléments de suspension respectifs (13a, 13b) hors de la structure dans un état non chargé, en particulier de manière à assurer à la fois la cinématique de désaccouplement pour un sous-ensemble d'éléments de suspension momentanément non chargés et la suspension de l'unité de plafond de type chenille (10) par un sous-ensemble d'éléments de suspension momentanément chargés.

4. Dispositif de suspension de plafond (100) selon toute revendication précédente, dans lequel l'unité de plafond de type à chenilles (10) présente au moins deux sortes/types d'éléments de suspension (13a, 13b), les différents types d'éléments de suspension étant découplés/couplés en fonction de la cinématique individuelle, dans lequel un premier sous-ensemble d'éléments de suspension (13a) est fixé à une première paire de rails circonférentiels (12a, 12b) et au moins un autre sous-ensemble d'éléments de suspension (13b) est fixé à une deuxième paire de rails circonférentiels (12a, 12b) respectivement à des premières et deuxièmes positions longitudinales prédéfinies correspondant à la régularité structurelle (1a).

5. Dispositif de suspension de plafond (100) selon toute revendication précédente, dans lequel l'unité de plafond de type à chenilles (10) présente au moins un point d'attache de charge configuré pour transférer les charges d'une charge externe attachée à l'unité de plafond de type à chenilles (10) ; **et/ou** dans lequel l'unité de plafond de type à chenilles (10) présente au moins une unité de levage, ou l'arrangement de suspension de plafond (100) présente au moins deux unités de plafond de type à chenilles (10) présentant chacune au moins une unité de levage, l'unité de levage étant configurée pour transférer les charges d'une charge externe à la structure de plafond (1).

6. Dispositif de suspension de plafond (100) selon toute revendication précédente, dans lequel l'unité de plafond de type à chenilles (10) présente au moins un entraînement interagissant avec au moins l'une des pistes circonférentielles (12a, 12b), dans lequel le dispositif de suspension de plafond (100) est configuré pour un mouvement d'entraînement prédéfinissable de l'unité de plafond de type à chenilles (10) au moins dans ladite deuxième direction spatiale ;
**et/ou** dans lequel l'unité de plafond à chenilles (10) présente une unité de stockage d'énergie fournissant de l'énergie à au moins un entraînement de l'unité de plafond à chenilles (10), en particulier à au moins un entraînement interagissant avec au moins l'une des chenilles circonférentielles (12a, 12b).

7. Dispositif de suspension de plafond (100) selon toute revendication précédente, dans lequel le dispositif de suspension de plafond (100) présente un dispositif de détection présentant au moins un capteur du groupe suivant : capteur de vitesse, capteur de distance, capteur de mesure de position, capteur de force, capteur d'accélération ou gyroscope ; dans lequel le dispositif de suspension de plafond (100) est configuré pour commander au moins une unité de plafond de type à chenilles (10) sur la base des données de mesure momentanées d'au moins un capteur ;
**et/ou** dans **lequel** l'unité de plafond de type à chenilles (10) présente une unité de communication configurée pour la communication sans fil au moins à l'intérieur du dispositif de suspension de plafond (100), dans lequel l'unité de plafond de type à chenilles (10) présente une unité de stockage d'énergie fournissant de l'énergie à l'unité de communication, en particulier de manière à ce que l'unité de plafond de type à chenilles (10) soit énergétiquement autonome pendant au moins une période de plusieurs jours ou semaines ou d'un mois ;
**et/ou** dans lequel le dispositif de suspension de plafond (100) est configuré pour localiser des unités de plafond de type à chenilles individuelles sur la base d'au moins un signal de localisation transmis par des unités de plafond de type à chenilles individuelles.

8. Dispositif de suspension de plafond (100) selon toute revendication précédente, dans lequel chaque élément de suspension présente au moins un élément de mouvement disposé et configuré pour déplacer l'unité de plafond de type à chenilles (10) dans ladite première direction spatiale, dans lequel l'unité de plafond de type à chenilles (10) présente au moins deux entraînements interagissant à la fois avec au moins une des pistes circonférentielles (12a, 12b) et avec lesdits éléments de mouvement, dans lequel le dispositif de suspension de plafond (100) est configuré pour un mouvement entraîné bidimensionnel prédéfinissable de l'unité de plafond de type à chenilles (10) dans lesdites directions spatiales.

9. Dispositif de suspension de plafond (100) selon toute revendication précédente, dans lequel les unités de profilé (1.1) du dispositif de suspension de plafond (100) sont disposées selon au moins deux régularités structurelles différentes respectivement par rapport à ladite deuxième direction spatiale, à savoir une première régularité structurelle (1a) définissant une/la distance relative des unités de profilé (1.1) correspondant à la distance relative des éléments de suspension (13a, 13b) fixés aux rails, et une deuxième régularité structurelle étant un multiple entier de ladite première régularité structurelle (1a), dans laquelle le nombre d'éléments de suspension (13a, 13b) s'engageant/couplant momentanément est de préférence au moins deux dans une/la zone de chevauchement de la deuxième régularité structurelle, et dans laquelle une/la zone de la première régularité structurelle (1a) a de préférence une première capacité de charge et la zone de la deuxième régularité structurelle a une deuxième capacité de charge ;
**et/ou** dans lequel les unités de profil (1.1) du dispositif de suspension de plafond (100) définissent dans l'espace au moins deux charges admissibles différentes dans au moins deux sections spatiales du dispositif de suspension de plafond (100) le long du plafond ;
**et/ou** dans lequel le dispositif de suspension de plafond (100) est couplé à un autre dispositif de suspension de plafond (100), dans lequel les unités de profil (1.1) du dispositif de suspension de plafond (100) sont disposées selon une première régularité structurelle (1a), dans lequel les unités de profil (1.1) de l'autre dispositif de suspension de plafond (100) sont disposées selon une deuxième régularité structurelle, dans lequel la deuxième régularité structurelle est un multiple entier de ladite première régularité structurelle (1a).

10. Dispositif de suspension de plafond (100) selon toute revendication précédente, dans lequel le dispositif de suspension de plafond (100) présente une pluralité d'unités de plafond de type à chenilles présentant chacune au moins un point de fixation ou une unité de levage configurés pour transférer des charges externes d'au moins 50 kg ou 100 kg à la structure de plafond (1), dans lequel le dispositif de suspension de plafond (100) est configuré pour disposer une pluralité de charges externes dans des positions individuelles bidimensionnelles ou tridimensionnelles les unes par rapport aux autres, en particulier en étant attachées respectivement à une unité de plafond de type à chenilles (10) ;
**ou** dans lequel l'unité de plafond de type à chenilles (10) présente au moins un point de fixation ou une unité de levage structurellement reliée à au moins une des voies circonférentielles (12a, 12b), dans lequel l'unité de plafond de type à chenilles (10) est configurée pour transférer des charges d'une charge externe d'au moins 200 kg ou 500 kg à la structure de plafond (1), dans lequel le dispositif de suspension de plafond (100) est configuré pour le transport/déplacement au moins bidimensionnel d'au moins un individu suspendu via le point de fixation ou l'unité de levage le long de la structure de plafond (1) ;
**ou** dans lequel l'unité de plafond de type à chenilles (10) présente au moins un point de fixation ou une unité de levage structurellement reliée à au moins une des voies circonférentielles (12a, 12b), dans lequel l'unité de plafond de type à chenilles (10) est configurée pour transférer des charges d'une charge externe d'au moins 1 000 kg ou 10 000 kg à la structure de plafond (1), dans lequel le dispositif de suspension de plafond (100) est configuré pour le transport/déplacement au moins bidimensionnel de la charge externe suspendue via le point de fixation ou l'unité de levage le long de la structure de plafond (1) ;
**ou** dans lequel le dispositif de suspension de plafond (100) présente une pluralité d'unités de plafond de type à chenilles présentant chacune au moins un point de fixation ou une unité de levage configurés pour transférer des charges externes à la structure de plafond (1), dans lequel le dispositif de suspension de plafond (100) est configuré pour contrôler le mouvement unidimensionnel ou bidimensionnel ou la trajectoire de mouvement d'un sous-ensemble d'au moins deux des unités de plafond de type à chenilles en fonction l'une de l'autre, en particulier de manière à ce que les unités de plafond de type à chenilles du sous-ensemble se déplacent de manière analogue, en particulier en contrôlant également au moins deux palans du sous-ensemble transportant la même charge externe ;
**ou** dans lequel le dispositif de suspension de plafond (100) présente une pluralité d'unités de plafond de type à chenilles présentant chacune au moins une cavité de logement configurée pour accueillir au moins un paquet, dans lequel le dispositif de suspension de plafond (100) présente au moins une unité de commande configurée pour la commande sans fil resp. transmission de données sans fil, dans lequel le dispositif de suspension de plafond (100) est configuré pour commander le mouvement unidimensionnel ou bidimensionnel ou la trajectoire de mouvement d'une unité de plafond à chenilles (10) respective et/ou d'un sous-ensemble d'au moins deux des unités de plafond à chenilles en fonction les unes des autres, en particulier de manière à ce que la pluralité d'unités de plafond à chenilles (10) se déplace simultanément selon une pluralité de trajectoires de mouvement unidimensionnelles ou bidimensionnelles individuelles ;
**ou** dans lequel l'unité de plafond de type à chenilles (10) présente au moins un point de fixation ou une unité de levage, chacun étant configuré pour transférer des charges d'une charge externe à la structure de plafond (1), dans lequel le dispositif de suspension de plafond (100) présente un dispositif de détection présentant au moins un capteur du groupe suivant : capteur de force, capteur d'accélération resp. gyroscope. gyroscope ; dans lequel le dispositif de suspension du plafond (100) est configuré pour le délestage de la gravité basé sur l'exercice d'une force active dans au moins une direction spatiale via le point de fixation ou l'unité de levage, dans lequel la quantité de force dépend de la gravité effective et/ou de la charge effective, en particulier sur la base des données momentanées d'au moins un capteur de force, de préférence avec la quantité de force étant réglable, par exemple, selon les commandes individuelles de l'utilisateur.

11. Dispositif de suspension de plafond (100) selon toute revendication précédente, dans lequel au moins une unité de plafond de type à chenilles (10) présente au moins un entraînement, dans lequel l'unité de dispositif de suspension de plafond présente une unité de commande contrôlant l'entraînement, dans lequel le dispositif de suspension de plafond présente un dispositif de détection présentant au moins un capteur du groupe suivant : capteur de vitesse, capteur de distance, capteur de mesure de position, capteur de force, capteur d'accélération resp. gyroscope. gyroscope ; dans lequel le dispositif de suspension du plafond est configuré pour commander au moins une unité de plafond de type à chenilles (10) sur la base des données de mesure momentanées d'au moins un capteur, en particulier pour commander une position ou un état de mouvement absolu ou relatif d'au moins une unité de plafond de type à chenilles (10).

12. Dispositif de suspension de plafond (100) selon toute revendication précédente, dans lequel le dispositif de suspension de plafond (100) présente une pluralité d'unités de plafond de type à chenilles présentant respectivement au moins un capteur et une unité de communication communiquant avec une unité de commande du dispositif de suspension de plafond (100), dans lequel le dispositif de suspension de plafond (100) est configuré pour prédéfinir une pluralité de trajectoires individuelles de mouvement bidimensionnel d'unités de plafond de type à chenilles respectives ;
**ou** dans lequel le dispositif de suspension de plafond (100) comporte une unité de commande centrale contrôlant au moins les positions momentanées des unités de plafond à chenilles du dispositif de suspension de plafond (100), dans lequel chaque unité de plafond à chenilles (10) comporte une unité de communication pour la transmission sans fil de signaux de commande à au moins un entraînement ou un actionneur de l'unité de plafond à chenilles respective (10) ;
**ou** dans lequel le dispositif de suspension de plafond (100) est configuré pour une commande décentralisée, dans lequel chaque unité de plafond de type à chenilles (10) présente un dispositif de détection fournissant des données de détection momentanées à au moins un entraînement ou un actionneur de l'unité de plafond de type à chenilles (10).

13. Dispositif de suspension de plafond (100) selon toute revendication précédente, dans lequel le dispositif de suspension de plafond (100) comprend une base de données configurée pour stocker et accéder à au moins un jumeau numérique d'unités de plafond de type à chenilles individuelles et/ou de paquets individuels transportés par des unités de plafond de type à chenilles du dispositif de suspension de plafond (100), dans lequel le jumeau numérique comprend au moins des informations d'état momentané, dans lequel le dispositif de suspension de plafond (100) est configuré pour définir au moins un paramètre de commande pour des unités de plafond de type à chenilles individuelles sur la base des informations du au moins un jumeau numérique, en particulier pour commander à distance des unités de plafond de type à chenilles individuelles.

14. Méthode de suspension ou de positionnement d'au moins une unité de plafond à chenilles (10) sur une structure de plafond (1) s'étendant dans au moins deux directions spatiales pour fournir au moins deux degrés de liberté pour au moins un positionnement bidimensionnel ou des mouvements bidimensionnels de l'unité de plafond à chenilles (10) en suspension le long de la structure de plafond (1), en particulier en conjonction avec le déplacement/la conduite active de l'unité de plafond à chenilles (10) le long de la structure de plafond (1), en particulier en réorientant activement la direction de déplacement de l'unité de plafond à chenilles, en particulier dans/avec un dispositif de suspension de plafond (100) selon l'une quelconque des revendications précédentes 1 à 13, dans lequel la structure de plafond (1) comprend une pluralité d'unités de profilés (1.1) s'étendant dans une première direction spatiale, dans laquelle la structure de plafond (1) définit au moins une régularité structurelle (1a) dans une deuxième direction spatiale ; dans lequel l'unité de plafond de type à chenilles (10) est suspendue au moyen d'une pluralité d'éléments de suspension (13a, 13b) reliant l'unité de plafond de type à chenilles (10) à la structure de plafond (1) au moyen d'une cinématique de dé/couplage dépendant d'un mouvement relatif de l'unité de plafond par rapport à la structure de plafond (1) dans au moins ladite deuxième direction spatiale, dans lequel les éléments de suspension (13a, 13b) sont fixés à et guidés par au moins deux voies circonférentielles (12a, 12b) de l'unité de plafond de type à chenilles (10), dans lequel les voies circonférentielles (12a, 12b) définissent respectivement une trajectoire spécifique de mouvement circonférentiel des éléments de suspension respectifs (13a, 13b), permettant ainsi une cinématique de désaccouplement qui suspend et déplace relativement l'élément de suspension respectif par rapport à la structure de plafond (1) lors d'un mouvement relatif de l'unité de plafond de type à chenilles (10) dans ladite seconde direction spatiale, en particulier avec l'unité de plafond de type à chenilles (10) restant mobile dans ladite première direction spatiale le long des unités de profilé (1.1), indépendamment d'un mouvement momentané dans ladite deuxième direction spatiale.

15. Programme d'ordinateur comprenant des instructions qui, lorsque le programme est exécuté par un ordinateur, amènent l'ordinateur à exécuter les étapes du procédé selon la revendication 14 du procédé précédent dans le cadre de la fourniture et du contrôle du mouvement ou des positions relatives/absolues d'au moins une unité de plafond de type à chenilles (10), notamment en contrôlant au moins un entraînement d'au moins une unité de plafond de type à chenilles (10) interagissant avec au moins une des voies circonférentielles (12a, 12b), notamment sur la base de données de position absolue et/ou relative momentanée d'au moins une unité de plafond de type à chenilles (10).
